# EUROPEAN PATENT APPLICATION

(11) **EP 4 570 810 A1**
(43) Date of publication of application: **18.06.2025**
(21) Application number: 23852631.3
(22) Date of filing: 10.08.2023
(51) Int. Cl.: C07F 7/18, C09K 3/18, G02B 1/11, G02B 1/18, G02B 5/30, G09F 9/00

(54) **SILANE COMPOUND**

(30) Priority: 10.08.2022 JP 2022128448; 10.04.2023 JP 2023063753
(71) Applicant: DAIKIN INDUSTRIES, LTD., Osaka-shi, Osaka 530-0001 (JP)
(72) Inventor: TAKANO, Shinya, Osaka-Shi, Osaka 530-0001 (JP); KUBOTA, Hiroki, Osaka-Shi, Osaka 530-0001 (JP); NAKANO, Nozomi, Osaka-Shi, Osaka 530-0001 (JP); KATAOKA, Manami, Osaka-Shi, Osaka 530-0001 (JP); YAMAGUCHI, Fumihiko, Osaka-Shi, Osaka 530-0001 (JP); NOMURA, Takashi, Osaka-Shi, Osaka 530-0001 (JP); KIMURA, Mari, Osaka-Shi, Osaka 530-0001 (JP); MATSUI, Motoshi, Osaka-Shi, Osaka 530-0001 (JP); MORIMOTO, Kazuki, Osaka-Shi, Osaka 530-0001 (JP)
(74) Representative: Hoffmann Eitle
(86) International application number: PCT/JP2023/029317
(87) International publication number: WO 2024/034669

(57) **Abstract**

The present invention provides a compound represented by the following formula (1) wherein R¹ is a monovalent group containing one or more Si atoms to which neither a hydroxyl group nor a hydrolyzable group is directly bonded, X¹ is a divalent organic group including an alkylene group having 11 or more carbon atoms, and R^{Si} is a monovalent group containing a Si atom to which a hydroxyl group or a hydrolyzable group is bonded.

R¹-X¹-R^{Si} (1)

## Description

### Technical Field

The present disclosure relates to a silane compound.

### Background Art

Certain types of silane compounds are known to be capable of providing excellent water- and oil-repellency when used in surface treatment of a substrate (Patent Literature 1).

### Citation List

### Patent Literature

Patent Literature 1: JP 2019-44179 A

### Summary of Invention

### Technical Problem

An object of the present disclosure is to provide a compound capable of forming a surface-treating layer having both abrasion durability and fingerprint removability by wiping in a well-balanced manner.

### Solution to Problem

The present disclosure includes the following embodiments.
[1] A compound represented by the following formula (1):
   [Formula 1]

   R¹-X¹-R^{Si} (1)

   wherein
   R¹ is a monovalent group containing one or more Si atoms to which neither a hydroxyl group nor a hydrolyzable group is directly bonded,
   X¹ is a divalent organic group including an alkylene group having 11 or more carbon atoms, and
   R^{Si} is a monovalent group containing a Si atom to which a hydroxyl group or a hydrolyzable group is bonded.
[2] The compound according to [1], wherein
   R¹ is R³-(SiR⁴₂O)ₙ-SiR⁴₂-,
   R³ is a C₁₋₁₂ alkyl group,
   R⁴ is each independently a C₁₋₁₂ alkyl group, and
   n is 0 to 1,500.
[3] The compound according to [2], wherein R³ is a methyl group.
[4] The compound according to [1], wherein
   R¹ is R³-(SiR⁴₂O)-SiR⁴₂-;
   R³ is a group represented by the following group A or group B: 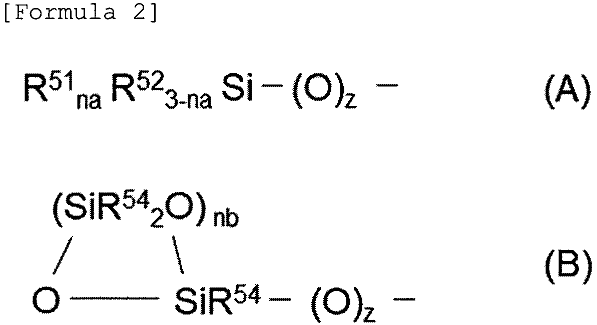 wherein
      R⁵¹ is each independently a group represented by - (R⁶¹-SiR⁵³₂)ₘₐ-R⁵³,
         R⁶¹ is each independently an oxygen atom or a C₁₋₆ alkylene group,
         R⁵³ is each independently a hydrocarbon group or R^{51'},
            R^{51'} has the same meaning as R⁵¹,
         ma is each independently an integer of 1 to 5,
      provided that the number of R^{51'} in R⁵¹ is 20 or less,
      R⁵² is each independently a hydrocarbon group,
      na is an integer of 1 to 3,
      R⁵⁴ is each independently a hydrocarbon group,
      nb is an integer of 1 to 5, and
      z is 0 or 1;
      R⁵⁴ is each independently a C₁₋₁₂ alkyl group; and
      n is 0 to 1,500.
[5] The compound according to any one of [2] to [4], wherein R⁴ is a methyl group.
[6] The compound according to any one of [2] to [5], wherein n is 1 or 2.
[7] The compound according to any one of [1] to [6], wherein
   R¹ is -SiR⁵₃,
   R⁵ is each independently a C₁₋₆ alkyl group or -SiR⁶₃, and
   R⁶ is each independently a C₁₋₆ alkyl group.
[8] The compound according to any one of [1] to [7], wherein
   R¹ is a group represented by the following group A or group B: 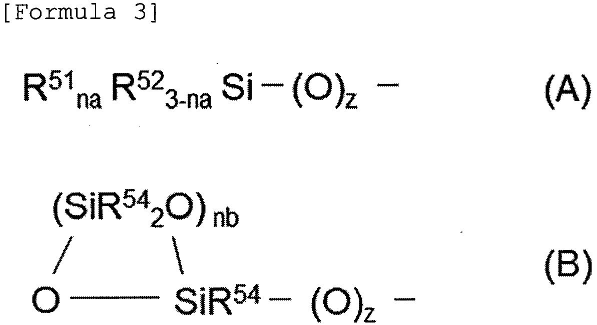 wherein
   R⁵¹ is each independently a group represented by -(R⁶¹-SiR⁵³₂)ₘₐ-R⁵³,
      R⁶¹ is each independently an oxygen atom or a C₁₋₆ alkylene group,
      R⁵³ is each independently a hydrocarbon group or R^{51'},
         R^{51'} has the same meaning as R⁵¹,
      ma is each independently an integer of 1 to 5,
   provided that the number of R^{1'} in R¹ is 20 or less,
   R⁵² is each independently a hydrocarbon group,
   na is an integer of 1 to 3,
   R⁵⁴ is each independently a hydrocarbon group,
   nb is an integer of 1 to 5, and
   z is 0 or 1.
[9] The compound according to any one of [1] to [8], wherein
   X¹ is a divalent organic group further including -CO-, -COO-, -NR²-, -CONR²-, -OCONR²-, -NR²-CO-NR²-, -O-, -S-, -O-(CH₂)ₓ-CONR²-, or -O-(CH₂)ₓ-CO-,
   R² is a hydrogen atom or a C₁₋₆ alkyl group, and
   x is an integer of 1 to 20.
[10] The compound according to any one of [1] to [9], wherein X¹ is a group represented by the following formula:

   -X²¹-X¹⁰-X¹¹-X¹²-

   wherein
   X²¹ is -O-, R⁶¹_{b1}R⁶²_{3-b1}C-, R⁶³_{b2}R⁶⁴_{3-b2}Si-, or R⁶⁵₂N-,
      R⁶¹ is a divalent organic group,
      R⁶² is a hydrogen atom or a monovalent organic group,
      R⁶³ is a divalent organic group,
      R⁶⁴ is a hydrogen atom or a monovalent organic group,
      R⁶⁵ is a divalent organic group,
      b1 is 2 or 3,
      b2 is 2 or 3,
   X¹⁰ is an alkylene group having 11 or more carbon atoms,
   X¹¹ is a single bond, -CO-, -COO-, -NR²-, -CONR²-, - OCONR²-, -NR²-CO-NR²-, -O-, -S-, -O-(CH₂)ₓ-CONR²-, or -O-(CH₂)ₓ-CO-,
   R² is a hydrogen atom or a C₁₋₆ alkyl group,
   x is an integer of 1 to 20, and
   X¹² is a single bond or a C₁₋₆ alkylene group.
[11] The compound according to any one of [1] to [10], wherein the number of carbon atoms of the alkylene group in X¹ is greater than the number of Si atoms in R¹.
[12] The compound according to any one of [1] to [11], wherein the number of carbon atoms of the alkylene group in X¹ is not less than 2.5 times the number of Si atoms in R¹.
[13] The compound according to any one of [1] to [12], wherein the number of carbon atoms of the alkylene group in X¹ is greater than the number of atoms of the main chain in R¹.
[14] The compound according to any one of [1] to [13], wherein the number of carbon atoms of the alkylene group in X¹ is not less than 2.0 times the number of atoms of the main chain in R¹.
[15] The compound according to any one of [1] to [14], wherein
   R^{Si} is a group represented by the following formula (S1), (S2), (S3), or (S4):
   [Formula 4]

   - SiR¹¹ₙ₁R¹²₃₋ₙ₁ (S1)

   - SiR^{a1}ₖ₁R^{b1}ₗ₁R^{c1}ₘ₁ (S2)

   - CR^{d1}ₖ₂R^{e1}ₗ₂R^{f1}ₘ₂ (S3)

   **-** NR^{g1}R^{h1} (S4)

   wherein
   R¹¹ is each independently a hydroxyl group or a hydrolyzable group,
   R¹² is each independently a hydrogen atom or a monovalent organic group,
   n1 is an integer of 1 to 3,
   R^{a1} is each independently -Z¹-SiR²¹ₚ₁R²²_{q1}R²³ᵣ₁,
   Z¹ is each independently an oxygen atom or a divalent organic group,
   R²¹ is each independently -Z^{1'}-SiR^{21'}_{p1'}R^{22'}_{q1'}R^{23'}_{r1'},
   R²² is each independently a hydroxyl group or a hydrolyzable group,
   R²³ is each independently a hydrogen atom or a monovalent organic group,
   p1 is each independently an integer of 0 to 3,
   q1 is each independently an integer of 0 to 3,
   r1 is each independently an integer of 0 to 3,
   Z^{1'} is each independently an oxygen atom or a divalent organic group,
   R^{21'} is each independently -Z^{1"}-SiR^{22"}_{q1"}R^{23"}_{r1"},
   R^{22'} is each independently a hydroxyl group or a hydrolyzable group,
   R^{23'} is each independently a hydrogen atom or a monovalent organic group,
   p1' is each independently an integer of 0 to 3,
   q1' is each independently an integer of 0 to 3,
   r1' is each independently an integer of 0 to 3,
   Z^{1"} is each independently an oxygen atom or a divalent organic group,
   R^{22"} is each independently a hydroxyl group or a hydrolyzable group,
   R^{23"} is each independently a hydrogen atom or a monovalent organic group,
   q1" is each independently an integer of 0 to 3,
   r1" is each independently an integer of 0 to 3,
   R^{b1} is each independently a hydroxyl group or a hydrolyzable group,
   R^{c1} is each independently a hydrogen atom or a monovalent organic group,
   k1 is each independently an integer of 0 to 3,
   l1 is each independently an integer of 0 to 3,
   m1 is each independently an integer of 0 to 3,
   R^{d1} is each independently -Z²-CR³¹ₚ₂R³²_{q2}R³³ᵣ₂,
   Z² is each independently a single bond, an oxygen atom, or a divalent organic group,
   R³¹ is each independently -Z^{2'}-CR^{32'}_{q2'}R^{33'}_{r2'},
   R³² is each independently -Z³-SiR³⁴ₙ₂R³⁵₃₋ₙ₂,
   R³³ is each independently a hydrogen atom, a hydroxyl group, or a monovalent organic group,
   p2 is each independently an integer of 0 to 3,
   q2 is each independently an integer of 0 to 3,
   r2 is each independently an integer of 0 to 3,
   Z^{2'} is each independently a single bond, an oxygen atom, or a divalent organic group,
   R^{32'} is each independently -Z³-SiR³⁴ₙ₂R³⁵₃₋ₙ₂,
   R^{33'} is each independently a hydrogen atom, a hydroxyl group, or a monovalent organic group,
   q2' is each independently an integer of 0 to 3,
   r2' is each independently an integer of 0 to 3,
   Z³ is each independently a single bond, an oxygen atom, or a divalent organic group,
   R³⁴ is each independently a hydroxyl group or a hydrolyzable group,
   R³⁵ is each independently a hydrogen atom or a monovalent organic group,
   n2 is each independently an integer of 0 to 3,
   R^{e1} is each independently -Z³-SiR³⁴ₙ₂R³⁵₃₋ₙ₂,
   R^{f1} is each independently a hydrogen atom, a hydroxyl group, or a monovalent organic group,
   k2 is each independently an integer of 0 to 3,
   l2 is each independently an integer of 0 to 3,
   m2 is each independently an integer of 0 to 3,
   R^{g1} and R^{h1} are each independently -Z⁴-SiR¹¹ₙ₁R¹²₃₋ₙ₁, -Z⁴-SiR^{a1}ₖ₁R^{b1}₁₁R^{c1}ₘ₁, or -Z⁴-CR^{d1}ₖ₂R^{e1}₁₂R^{f1}ₘ₂, and
   Z⁴ is each independently a single bond, an oxygen atom, or a divalent organic group,
   provided that, in the formulae (S2), (S3), and (S4), at least one Si atom to which a hydroxyl group or a hydrolyzable group is bonded is present.
[16] A compound represented by the following formula (1a):
   [Formula 5]

   **R¹-X²-Rⁱ** **(1a)**

   wherein
   R¹ is a monovalent group containing one or more Si atoms to which neither a hydroxyl group nor a hydrolyzable group is directly bonded,
   X² is an alkylene group having 11 or more carbon atoms,
   Rⁱ is -COOR⁷, -CONR⁸₂, or -CONR⁷-CR⁸₃
   R⁷ is a hydrogen atom or a C₁₋₆ alkyl group, and
   R⁸ is a C₂₋₆ alkenyl group having a double bond at a terminal.
[17] A surface-treating agent comprising the compound according to any one of [1] to [15].
[18] The surface-treating agent according to [17], further comprising a condensate of the compound according to any one of [1] to [15].
[19] The surface-treating agent according to [17] or [18], further comprising a solvent selected from compounds represented by R⁸¹OR⁸², R⁸³ₙ₈C₆H₆₋ₙ₈, R⁸⁴R⁸⁵R⁸⁶Si-(O-SiR⁸⁷R⁸⁸) ₘ₈-R⁸⁹, and (OSiR⁸⁷R⁸⁸)ₘ₉
   wherein
   R⁸¹ to R⁸⁹ are each independently a monovalent organic group having 1 to 10 carbon atoms,
   m8 is an integer of 1 to 6,
   m9 is an integer of 4 to 8, and
   n8 is an integer of 0 to 6.
[20] The surface-treating agent according to [19], wherein the solvent is R⁸⁴R⁸⁵R⁸⁶_{Si}-(O-SiR⁸⁷R⁸⁸)ₘ₈-R⁸⁹.
[21] The surface-treating agent according to [19] or [20], wherein the solvent is hexamethyldisiloxane, hexaethyldisiloxane, octamethyltrisiloxane, octamethylcyclotetrasiloxane, or decamethylcyclopentasiloxane.
[22] The surface-treating agent according to any one of [17] to [21], which is for vacuum deposition.
[23] The surface-treating agent according to any one of [17] to [21], which is for wet coating.
[24] A pellet comprising the surface-treating agent according to any one of [17] to [21].
[25] An article comprising a substrate and a layer on the substrate, wherein the layer is formed from the compound according to any one of [1] to [15].
[26] The article according to [25], comprising, between the substrate and the aforementioned layer, a silicon oxidecontaining intermediate layer.
[27] The article according to [26], wherein the intermediate layer comprises an alkali metal atom.
[28] The article according to [27], wherein the alkali metal atom is at least partially a sodium atom.
[29] The article according to any one of [25] to [28], which is an optical member.
[30] The article according to any one of [25] to [28], which is a display.

### Advantageous Effect of Invention

The present disclosure can provide a compound capable of forming a surface-treating layer having both abrasion durability and fingerprint removability by wiping in a well-balanced manner.

### Description of Embodiments

The term "monovalent organic group" as used herein refers to a carbon-containing monovalent group. The monovalent organic group is not limited, and may be a hydrocarbon group or a derivative thereof. The derivative of a hydrocarbon group refers to a group that has one or more of N, O, S, Si, amide, sulfonyl, siloxane, carbonyl, carbonyloxy, and the like at the terminal or in the molecular chain of the hydrocarbon group. The term simply referred to as an "organic group" means a monovalent organic group. The term "divalent organic group" refers to a carbon-containing divalent group. The divalent organic group may be, for example, a divalent group obtained by further removing one hydrogen atom from an organic group. Similarly, an organic group having a valence of 3 or more refers to a group obtained by removing a predetermined number of hydrogen atoms from an organic group.

The "hydrocarbon group" as used herein refers to a group containing carbon and hydrogen and a group in which a hydrogen atom is removed from the hydrocarbon. Examples of the hydrocarbon group include, but are not limited to, C₁₋₂₀ hydrocarbon groups, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures. The hydrocarbon group may be substituted with one or more substituents.

Examples of the substituent of the "hydrocarbon group" as used herein include, but are not limited to, a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group each optionally substituted with one or more halogen atoms.

The "hydrolyzable group" as used herein refers to a group that can undergo a hydrolysis reaction, i.e., refers to a group that can be removed from the main backbone of the compound by a hydrolysis reaction. Examples of the hydrolyzable group include -OR^{h}, -OCOR^{h}, -O-N=CR^{h}₂, -NR^{h}₂, - NHR^{h}, -NCO, and a halogen (in these formulae, R^{h} represents a substituted or unsubstituted alkyl group having 1 to 4 carbon atoms), and -OR^{h} (i.e., an alkoxy group) is preferable. Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable.

The silane compound of the present disclosure is a compound represented by the following formula (1):
[Formula 6]

R¹ -X¹- R^{Si} (1)

wherein
R¹ is a monovalent group containing one or more Si atoms to which neither a hydroxyl group nor a hydrolyzable group is directly bonded,
X¹ is a divalent organic group including an alkylene group having 11 or more carbon atoms, and
R^{Si} is a monovalent group containing a Si atom to which a hydroxyl group or a hydrolyzable group is bonded.

R¹ is a monovalent group containing one or more Si atoms to which neither a hydroxyl group nor a hydrolyzable group is directly bonded.

The monovalent group containing one or more Si atoms to which neither a hydroxyl group nor a hydrolyzable group is directly bonded may contain a Si atom to which a hydroxyl group or a hydrolyzable group is directly bonded.

In one embodiment, the monovalent group containing one or more Si atoms to which neither a hydroxyl group nor a hydrolyzable group is bonded does not contain a Si atom to which a hydroxyl group or a hydrolyzable group is directly bonded.

In another embodiment, the monovalent group containing one or more Si atoms to which neither a hydroxyl group nor a hydrolyzable group is bonded contains one or more Si atoms to which a hydroxyl group or a hydrolyzable group is directly bonded.

In one embodiment, R¹ is a group represented by the following formula:

R³- (SiR⁴₂O)ₙ-SiR⁴₂-

wherein
R³ is a C₁₋₁₂ alkyl group or a group represented by the following group A or group B: 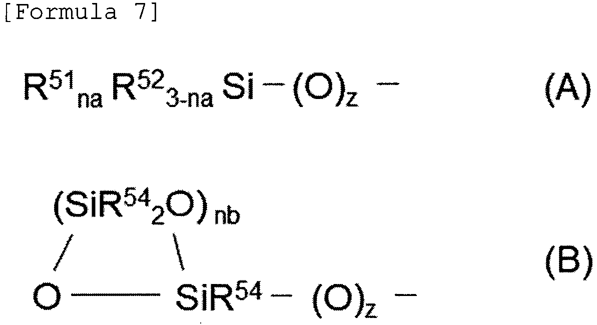 wherein
R⁵¹ is each independently a group represented by -(R⁶¹-SiR⁵³₂)ₘₐ-R⁵³,
   R⁶¹ is each independently an oxygen atom or a C₁₋₆ alkylene group,
   R⁵³ is each independently a hydrocarbon group or R^{51'}
      R^{51'} has the same meaning as R⁵¹,
   ma is each independently an integer of 1 to 5,
provided that the number of R^{51'} in R⁵¹ is 20 or less,
R⁵² is each independently a hydrocarbon group,
na is an integer of 1 to 3,
R⁵⁴ is each independently a hydrocarbon group,
nb is an integer of 1 to 5, and
z is 0 or 1;
R⁴ is each independently a C₁₋₁₂ alkyl group; and
n is 0 to 1,500.

In another embodiment, R¹ is a group represented by the group A or group B: 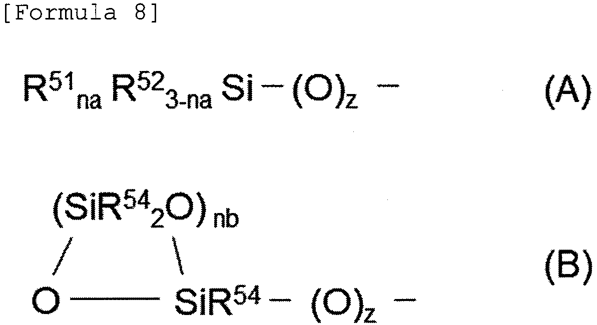 wherein
R⁵¹ is each independently a group represented by -(R⁶¹-SiR⁵³₂)ₘₐ-R⁵³,
   R⁶¹ is each independently an oxygen atom or a C₁₋₆ alkylene group,
   R⁵³ is each independently a hydrocarbon group or R^{51'} ,
      R^{51'} has the same meaning as R⁵¹,
   ma is each independently an integer of 1 to 5,
provided that the number of R^{1'} in R¹ is 20 or less,
R⁵² is each independently a hydrocarbon group,
na is an integer of 1 to 3,
R⁵⁴ is each independently a hydrocarbon group,
nb is an integer of 1 to 5, and
z is 0 or 1.

In one embodiment, R³ is a C₁₋₁₂ alkyl group.

The C₁₋₁₂ alkyl group in R³ may be linear or may be branched. In one embodiment, the C₁₋₁₂ alkyl group is linear. In another embodiment, the C₁₋₁₂ alkyl group is branched. The C₁₋₁₂ alkyl group is preferably a C₁₋₆ alkyl group, more preferably a C₁₋₃ alkyl group, even more preferably a methyl group or an ethyl group, and particularly preferably a methyl group.

In one embodiment, R³ is a group A or a group B.

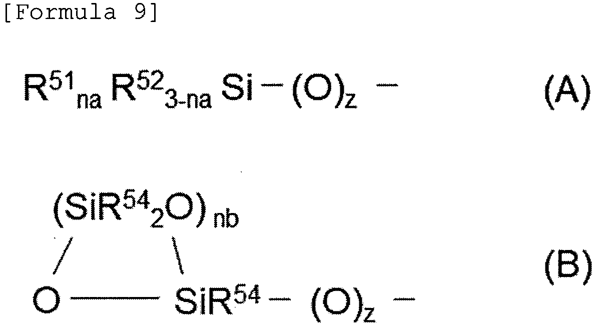

R⁵¹ is each independently a group represented by -(R⁶¹-SiR⁵³₂)ₘₐ-R⁵³.

R⁶¹ is each independently an oxygen atom or a C₁₋₆ alkylene group.

The C₁₋₆ alkylene group in R⁶¹ may be linear or may be branched. The C₁₋₆ alkylene group is preferably a C₁₋₄ alkylene group, and more preferably a C₂₋₄ alkylene group.

In one embodiment, R⁶¹ is O.

In one embodiment, some R⁶¹ groups are O, and other R⁶¹ groups are C₁₋₆ alkylene groups.

R⁵³ is each independently a hydrocarbon group or R^{51'}.

The hydrocarbon group in R⁵³ may preferably be an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, or a tert-butyl group.

The aryl group may be monocyclic or polycyclic. The aryl group is preferably an aryl group having 6 to 20 carbon atoms, and more preferably an aryl group having 6 to 10 carbon atoms. The aryl group is particularly preferably a phenyl group.

R⁵³ is preferably an alkyl group, and more preferably an alkyl group having 1 to 4 carbon atoms.

R^{51'} has the same meaning as R⁵¹. That is to say, R^{51'} is -(OSiR⁵³₂)ₘₐ-R⁵³, provided that, in R⁵¹, the number of R^{51'} is 20 or less, preferably 10 or less, more preferably 6 or less, and even more preferably 3 or less.

In one embodiment, R⁵³ is each independently a hydrocarbon group or R^{51'}.

In a preferable embodiment, R⁵³ is each independently a hydrocarbon group.

In one embodiment, R³ is -(R^{4'}-SiR^{3'}₂)_{ma'}-R^{3'}
wherein
R^{3'} is each independently a hydrocarbon group or -(R⁴-SiR³2)ₘₐ-R³,
at least one R^{3'} is -(R⁴-SiR³₂)ₘₐ-R³,
   R³ is each independently a hydrocarbon group,
   R⁴ is each independently an oxygen atom or a C₁₋₆ alkylene group,
      ma is each independently an integer of 1 to 5,
R^{4'} is each independently an oxygen atom or a C₁₋₆ alkylene group, and
ma' is each independently an integer of 1 to 5.

In another embodiment, R⁵³ is -(R^{61'}-SiR^{53'}₂)_{ma'}-R^{53'} wherein
R^{53'} is each independently a hydrocarbon group or -(R^{61"}-SiR^{53"}₂)_{ma"}-R^{3"},
at least one R^{53'} is - (R^{61"}-SiR^{53"}₂)_{ma"}-R^{53"},
   R^{53"} is each independently a hydrocarbon group or -(R⁶¹-SiR⁵³₂)ₘₐ-R⁵³,
   at least one R^{53"} is -(R⁶¹-SiR⁵²₂)ₘₐ-R⁵³,
      R⁵³ is each independently a hydrocarbon group,
      R⁶¹ is each independently an oxygen atom or a C₁₋₆ alkylene group,
      ma is each independently an integer of 1 to 5,
   R^{61"} is each independently an oxygen atom or a C₁₋₆ alkylene group,
   ma" is each independently an integer of 1 to 5,
R^{61'} is each independently an oxygen atom or a C₁₋₆ alkylene group, and
ma' is each independently an integer of 1 to 5.

ma is each independently an integer of 1 to 5, and preferably 1 or 2.

R⁵² is each independently a hydrocarbon group.

The hydrocarbon group in R⁵² may preferably be an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, or a tert-butyl group.

The aryl group may be monocyclic or polycyclic. The aryl group is preferably an aryl group having 6 to 20 carbon atoms, and more preferably an aryl group having 6 to 10 carbon atoms. The aryl group is particularly preferably a phenyl group.

R⁵² is preferably an alkyl group, and more preferably an alkyl group having 1 to 4 carbon atoms.

na is an integer of 1 to 3. In one embodiment, na is 2. In another embodiment, na is 3. Note that na, when R^{51'} is present, is independently selected for (R⁶¹-SiR⁵³₂)ₘₐ.

z is 0 or 1. In one embodiment, z is 0. In another embodiment, z is 1.

In a preferable embodiment, in the group A,
R⁵¹ is each independently a group represented by -(R⁶¹-SiR⁵³₂)ₘₐ-R⁵³,
   R⁶¹ is each independently an oxygen atom or a C₁₋₆ alkylene group,
   R⁵³ is each independently a hydrocarbon group and preferably an alkyl group having 1 to 4 carbon atoms,
   ma is 1 or 2,
R⁵² is each independently a hydrocarbon group and preferably an alkyl group having 1 to 4 carbon atoms, and
na is 1 or 2.

Examples of the group A include, but are not limited to, the following groups.

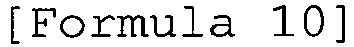

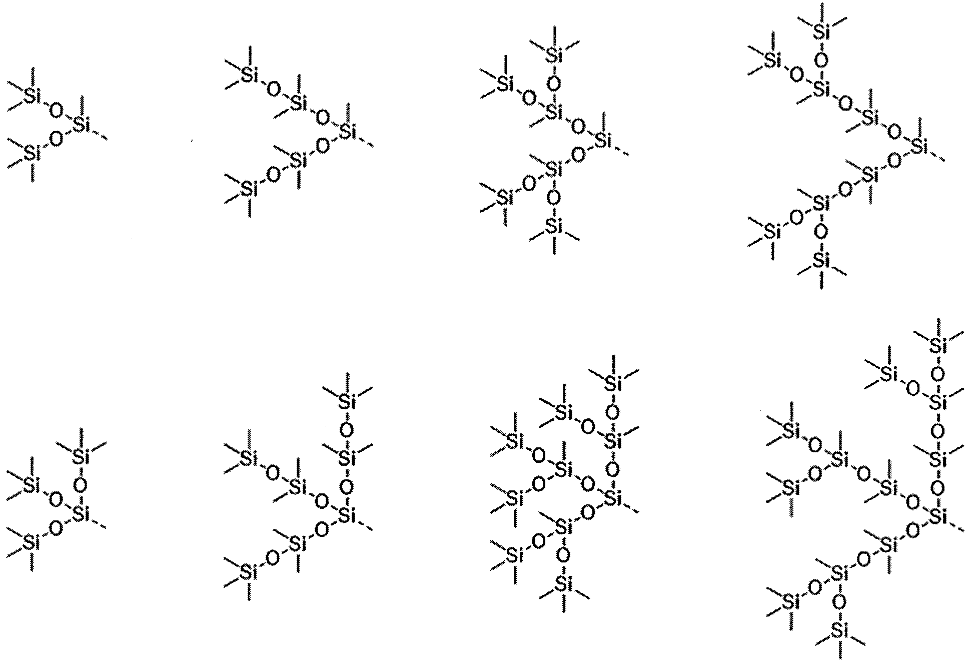

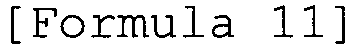

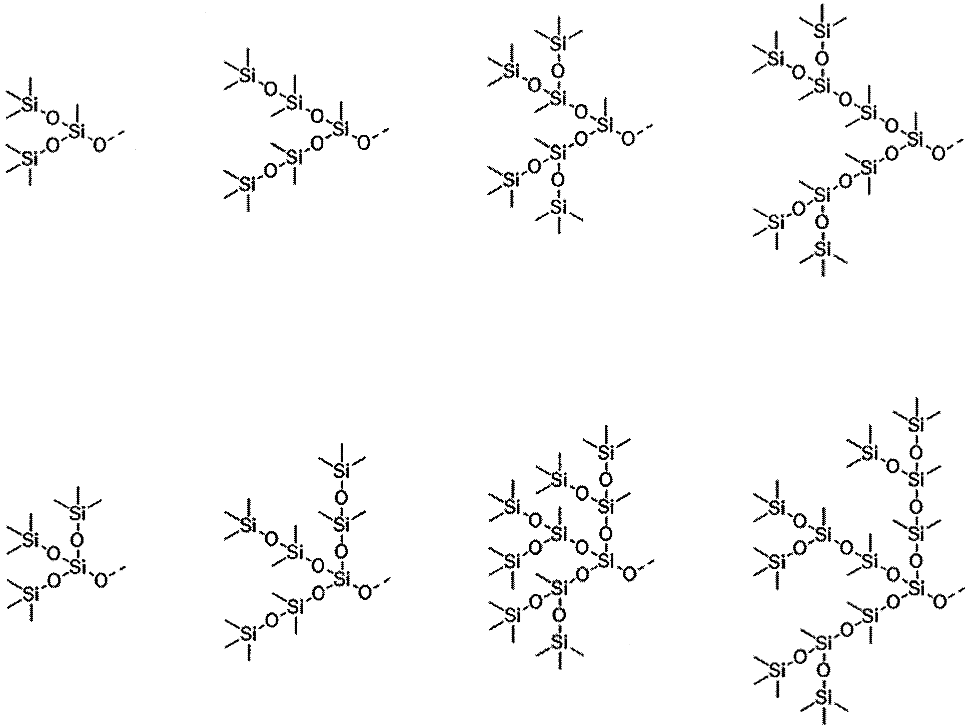

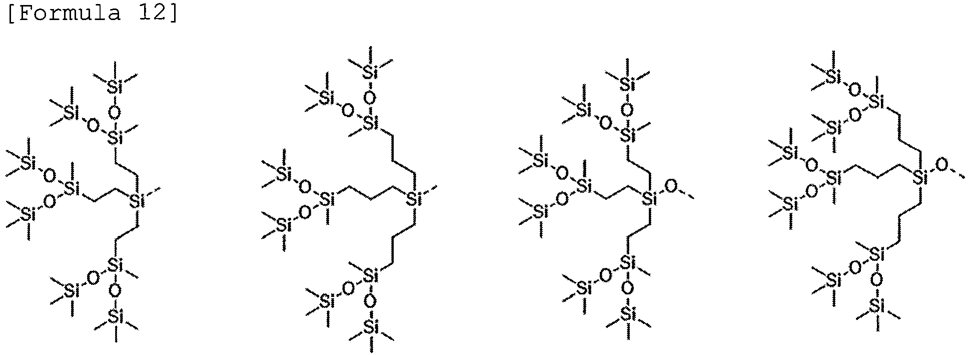

R⁵⁴ is each independently a hydrocarbon group.

The hydrocarbon group in R⁵⁴ may preferably be an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, or a tert-butyl group.

The aryl group may be monocyclic or polycyclic. The aryl group is preferably an aryl group having 6 to 20 carbon atoms, and more preferably an aryl group having 6 to 10 carbon atoms. The aryl group is particularly preferably a phenyl group.

R⁵⁴ is preferably an alkyl group, and more preferably an alkyl group having 1 to 4 carbon atoms.

nb is an integer of 1 to 5, and preferably 2 or 3.

In a preferable embodiment, in the group B,
R⁵⁴ is each independently a hydrocarbon group and preferably an alkyl group having 1 to 4 carbon atoms, and
nb is 2 or 3.

Examples of the group B include, but are not limited to, the following groups.

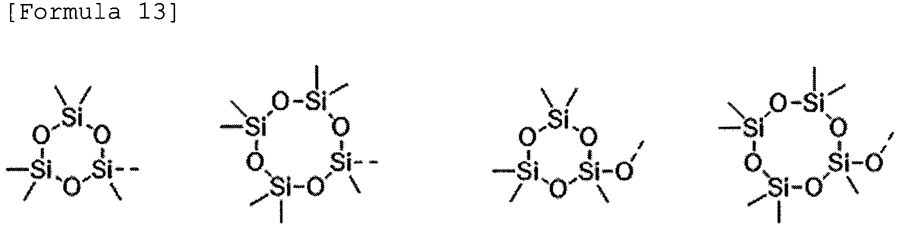

The C₁₋₁₂ alkyl group in R⁴ may be linear or may be branched. In one embodiment, the C₁₋₁₂ alkyl group is linear. In another embodiment, the C₁₋₁₂ alkyl group is branched. The C₁₋₁₂ alkyl group is preferably a C₁₋₆ alkyl group, more preferably a C₁₋₃ alkyl group, even more preferably a methyl group or an ethyl group, and particularly preferably a methyl group.

n may be 0 to 1,500, preferably 0 to 1,500, more preferably 0 to 500, and even more preferably 0 to 10. In one embodiment, n may be preferably 1 to 1,500, more preferably 1 to 500, and even more preferably 1 to 10. n is yet more preferably 0, 1, or 2.

In one embodiment, n is 10 to 500, and more preferably 10 to 100.

In a preferable embodiment, R³ is methyl, R⁴ is methyl, and n is 1 or 2.

In one embodiment, R¹ is a monovalent organic group containing one or more Si atoms to which neither a hydroxyl group nor a hydrolyzable group is directly bonded and not containing a siloxane bond.

In one embodiment, R¹ is a group represented by the following formula:

-SiR⁵₃

wherein
R⁵ is each independently a C₁₋₆ alkyl group or -SiR⁶₃, and
R⁶ is each independently a C₁₋₆ alkyl group.

The C₁₋₆ alkyl group in R⁵ may be linear or may be branched. In one embodiment, the C₁₋₆ alkyl group is linear. In another embodiment, the C₁₋₆ alkyl group is branched. The C₁₋₆ alkyl group is preferably a C₁₋₄ alkyl group.

The C₁₋₁₂ alkyl group in R⁶ may be linear or may be branched. In one embodiment, the C₁₋₁₂ alkyl group is linear. In another embodiment, the C₁₋₁₂ alkyl group is branched. The C₁₋₁₂ alkyl group is preferably a C₁₋₆ alkyl group, more preferably a C₁₋₃ alkyl group, even more preferably a methyl group or an ethyl group, and particularly preferably a methyl group.

SiR⁵₃ may preferably be -Si(CH₃)₃, -Si(CH₂CH₃)₃, - Si(CH(CH₃)₂)₃, -Si(CH₃)(CH₃)(C(CH₃)₃)), -Si(Si (CH₃)₃, or - Si(Si (CH₂CH₃)₃.

X¹ is a divalent organic group including an alkylene group having 11 or more carbon atoms.

X¹ is, in addition to an alkylene group having 11 or more carbon atoms, a divalent organic group further including -CO-, -COO-, -NR²-, -CONR²-, -OCONR²-, -NR²-CO-NR²-, -O-, -S-, -O- (CH₂)ₓ-CONR²-, or -O-(CH₂)ₓ-CO-; R² is a hydrogen atom or a C₁₋₆ alkyl group; and x is an integer of 1 to 20.

In one embodiment, X¹ is preferably a group represented by the following formula:

-X²¹-X¹⁰-X¹¹-X¹²-

wherein
X²¹ is -O-, R⁶¹_{b1}R⁶²_{3-b1}C-, R⁶³_{b2}R⁶⁴_{3-b2}Si-, or R⁶⁵₂N-,
   R⁶¹ is a divalent organic group,
   R⁶² is a hydrogen atom or a monovalent organic group,
      R⁶³ is a divalent organic group,
      R⁶⁴ is a hydrogen atom or a monovalent organic group,
      R⁶⁵ is a divalent organic group,
      b1 is 2 or 3,
      b2 is 2 or 3,
X¹⁰ is an alkylene group having 11 or more carbon atoms,
X¹¹ is a single bond, -CO-, -COO-, -NR²-, -CONR²-, - OCONR²-, -NR²-CO-NR²-, -O-, -S-, -O- (CH₂)ₓ-CONR²-, or -O-(CH₂)ₓ-CO-,
R² is a hydrogen atom or a C₁₋₆ alkyl group,
x is an integer of 1 to 20, and
X¹² is a single bond or a C₁₋₆ alkylene group.

In one embodiment, X¹ is preferably a group represented by the following formula:

-X¹⁰-X¹¹-X¹²-

wherein
X¹⁰ is an alkylene group having 11 or more carbon atoms,
X¹¹ is a single bond, -CO-, -COO-, -NR²-, -CONR²-, - OCONR²-, -NR²-CO-NR²-, -O-, -S-, -O-(CH₂)ₓ-CONR², or -O-(CH₂)ₓ-CO-,
R² is a hydrogen atom or a C₁₋₆ alkyl group,
x is an integer of 1 to 20, and
X¹² is a single bond or a C₁₋₆ alkylene group.

X²¹ is R⁶¹_{b1}R⁶²_{3-b1}C-, R⁶³_{b2}R⁶⁴_{3-b2}Si-, or R⁶⁵₂N-.

R⁶¹ is a divalent organic group.

R⁶¹ is preferably a C₁₋₆ alkylene group, -(CH₂)_{f1}-O-(CH₂)_{f2}- (wherein f1 is an integer of 0 to 6, such as an integer of 1 to 6, and f2 is an integer of 0 to 6, such as an integer of 1 to 6), or - (CH₂)_{f3}-phenylene- (CH₂)_{f4}- (wherein f3 is an integer of 0 to 6, such as an integer of 1 to 6, and f4 is an integer of 0 to 6, such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, R⁶¹ is a C₁₋₆ alkylene group or - (CH₂)_{f3}-phenylene- (CH₂)_{f4}-, and preferably -phenylene-(CH₂)_{f4}-.

In another preferable embodiment, R⁶¹ is a C₁₋₃ alkylene group. In one embodiment, R⁶¹ may be -CH₂CH₂CH₂-. In another embodiment, R⁶¹ may be -CH₂CH₂-.

R⁶² is a hydrogen atom or a monovalent organic group.

In one embodiment, R⁶² is a hydrogen atom.

In another embodiment, R⁶² is a monovalent organic group.

In R⁶², the monovalent organic group is preferably a C₁₋₂₀ alkyl group, more preferably a C₁₋₆ alkyl group, and even more preferably a methyl group.

b1 is 2 or 3. In one embodiment, b1 is 2. In another embodiment, b1 is 3.

R⁶³ is a divalent organic group.

R⁶³ is preferably a C₁₋₆ alkylene group, - (CH₂)_{g1}-O-(CH₂)_{g2}- (wherein g1 is an integer of 0 to 6, such as an integer of 1 to 6, and g2 is an integer of 0 to 6, such as an integer of 1 to 6), or - (CH₂)_{g3}-phenylene- (CH₂) _{g4}- (wherein g3 is an integer of 0 to 6, such as an integer of 1 to 6, and g4 is an integer of 0 to 6, such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, R⁶³ is a C₁₋₆ alkylene group or - (CH₂)_{g3}-phenylene- (CH₂)_{g4}-, and preferably -phenylene-(CH₂)_{g4}-.

In another preferable embodiment, R⁶³ is a C₁₋₃ alkylene group. In one embodiment, R⁶³ may be -CH₂CH₂CH₂-. In another embodiment, R⁶³ may be -CH₂CH₂-.

R⁶⁴ is a hydrogen atom or a monovalent organic group.

In one embodiment, R⁶⁴ is a hydrogen atom.

In another embodiment, R⁶⁴ is a monovalent organic group.

In R⁶⁴, the monovalent organic group is preferably a C₁₋₂₀ alkyl group, more preferably a C₁₋₆ alkyl group, and even more preferably a methyl group.

b2 is 2 or 3. In one embodiment, b2 is 2. In another embodiment, b2 is 3.

R⁶⁵ is a divalent organic group.

R⁶⁵ is preferably a C₁₋₆ alkylene group, - (CH₂)ₕ₁-O-(CH₂)ₕ₂- (wherein h1 is an integer of 0 to 6, such as an integer of 1 to 6, and h2 is an integer of 0 to 6, such as an integer of 1 to 6), or - (CH₂)ₕ₃-phenylene- (CH₂)ₕ₄- (wherein h3 is an integer of 0 to 6, such as an integer of 1 to 6, and h4 is an integer of 0 to 6, such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, R⁶⁵ is a C₁₋₆ alkylene group or -(CH₂)ₕ₃-phenylene-(CH₂)ₕ₄-, and preferably -phenylene-(CH₂)ₕ₄-.

In another preferable embodiment, R⁶⁵ is a C₁₋₃ alkylene group. In one embodiment, R⁶⁵ may be -CH₂CH₂CH₂-. In another embodiment, R⁶⁵ may be -CH₂CH₂-.

In one embodiment, X²¹ is R⁶¹_{b1}R⁶²_{3-b1}C-.

In one embodiment, X²¹ is R⁶³_{b2}R⁶⁴_{3-b2}Si-.

In one embodiment, X²¹ is R⁶⁵₂N-.

In one embodiment, X²¹ is -O-.

The number of carbon atoms of the alkylene group in X¹ and X¹⁰ may preferably be 12 or more, more preferably 16 or more, even more preferably 18 or more, and yet more preferably 22 or more. The number of carbon atoms of the alkylene group in X¹ and X¹⁰ may preferably be 60 or less, more preferably 40 or less, even more preferably 30 or less, and yet more preferably 24 or less. The number of carbon atoms of the alkylene group in X¹ and X¹⁰ may preferably be 11 to 60, more preferably 12 to 40, and even more preferably 18 to 30.

The alkylene group in X¹ and X¹⁰ may be linear or may be branched. The alkylene group is preferably linear.

X¹¹ is preferably -CO-, -COO-, -NR²-, -CONR²-, -OCONR²-, -NR²-CO-NR²-, -O-, -S-, -O-(CH₂)ₓ-CONR²-, or -O- (CH₂)ₓ-CO-, more preferably -CO-, -CONR²-, or -OCONR²-, and even more preferably -CONR²-. R² is preferably a hydrogen atom, and x is an integer of 1 to 20.

In one embodiment, X¹² is a single bond.

In another embodiment, X¹² is a C₁₋₆ alkylene group.

The C₁₋₆ alkylene group in X¹² may be linear or may be branched. In one embodiment, the C₁₋₆ alkylene group is linear. In another embodiment, the C₁₋₆ alkylene group is branched. The C₁₋₆ alkylene group is preferably a C₁₋₄ alkylene group, and more preferably a C₁₋₃ alkylene group.

In one embodiment, the number of carbon atoms of the alkylene group in X¹ is greater than the number of Si atoms in R¹. Causing the number of carbon atoms of the alkylene group in X¹ to be greater than the number of Si atoms in R¹ enables the abrasion durability of the resulting surface-treating layer to be increased.

In a preferable embodiment, the number of carbon atoms of the alkylene group in X¹ may be not less than 2.5 times, preferably not less than 3.0 times, and more preferably not less than 3.5 times the number of Si atoms in R¹. Also, the number of carbon atoms of the alkylene group in X¹ may preferably be not more than 50 times, such as not more than 30 times, not more than 20 times, or not more than 10 times the number of Si atoms in R¹.

In one embodiment, the number of carbon atoms of the alkylene group in X¹ is greater than the number of atoms of the main chain in R¹. Causing the number of carbon atoms of the alkylene group in X¹ to be greater than the number of atoms of the main chain in R¹ enables the abrasion durability of the resulting surface-treating layer to be increased.

In a preferable embodiment, the number of carbon atoms of the alkylene group in X¹ may be not less than 2.0 times, preferably not less than 2.5 times, more preferably not less than 3.0 times, and even more preferably not less than 4.0 times the number of atoms of the main chain in R¹. Also, the number of carbon atoms of the alkylene group in X¹ may preferably be not more than 30 times, such as not more than 20 times, not more than 10 times, or not more than 6.0 times the number of atoms of the main chain in R¹.

Here, the main chain in R¹ means an atomic chain having the largest number of atoms (excluding hydrogen atoms) from the Si atom in R¹ bonded to X¹. For example, the number of atoms of the main chain in R¹ is 4 in the case of Si(CH₃)₃OSi(CH₃)₂-, the number of atoms of the main chain in R¹ is 6 in the case of Si(CH₃)₃OSi(CH₃)₃OSi(CH₃)₂-, and 3 in the case of Si(Si(CH₃)₃)₃-.

R^{Si} is a monovalent group containing a Si atom to which a hydroxyl group or a hydrolyzable group is bonded.

R^{Si} is preferably a group represented by the following formula (S1), (S2), (S3), or (S4):
[Formula 14]

- SiR¹¹ₙ₁R¹²₃₋ₙ₁ (S1)

- SiR^{a1}ₖ₁R^{b1}ₗ₁R^{c1}ₘ₁ (S2)

- CR^{d1}ₖ₂R^{e1}ₗ₂R^{f1}ₘ₂ (S3)

- NR^{g1}R^{h1} (S4)

wherein
R¹¹ is each independently a hydroxyl group or a hydrolyzable group,
R¹² is each independently a hydrogen atom or a monovalent organic group,
n1 is an integer of 1 to 3,
R^{a1} is each independently -Z¹-SiR²¹ₚ₁R²²_{q1}R²³ᵣ₁,
Z¹ is each independently an oxygen atom or a divalent organic group,
R²¹ is each independently -Z^{1'}-SiR^{21'}_{p1'}R^{22'}_{q1'}R^{23'}_{r1'},
R²² is each independently a hydroxyl group or a hydrolyzable group,
R²³ is each independently a hydrogen atom or a monovalent organic group,
p1 is each independently an integer of 0 to 3,
q1 is each independently an integer of 0 to 3,
r1 is each independently an integer of 0 to 3,
Z^{1'} is each independently an oxygen atom or a divalent organic group,
R^{21'} is each independently -Z^{1"}-SiR^{22"}_{q1"}R^{23"}_{r1"},
R^{22'} is each independently a hydroxyl group or a hydrolyzable group,
R^{23'} is each independently a hydrogen atom or a monovalent organic group,
p1' is each independently an integer of 0 to 3,
q1' is each independently an integer of 0 to 3,
r1' is each independently an integer of 0 to 3,
Z^{1"} is each independently an oxygen atom or a divalent organic group,
R^{22"} is each independently a hydroxyl group or a hydrolyzable group,
R^{23"} is each independently a hydrogen atom or a monovalent organic group,
q1" is each independently an integer of 0 to 3,
r1" is each independently an integer of 0 to 3,
R^{b1} is each independently a hydroxyl group or a hydrolyzable group,
R^{c1} is each independently a hydrogen atom or a monovalent organic group,
k1 is each independently an integer of 0 to 3,
l1 is each independently an integer of 0 to 3,
m1 is each independently an integer of 0 to 3,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a hydrogen atom or a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
R^{g1} and R^{h1} are each independently -Z⁴-SiR¹¹ₙ₁R¹²₃₋ₙ₁, -Z⁴-SiR^{a1}ₖ₁R^{b1}₁₁R^{c1}ₘ₁, or -Z⁴-CR^{d1}ₖ₂R^{e1}₁₂R^{f1}ₘ₂, and
Z⁴ is each independently a single bond, an oxygen atom, or a divalent organic group,
provided that, in the formulae (S2), (S3), and (S4), at least one Si atom to which a hydroxyl group or a hydrolyzable group is bonded is present.

R¹¹ is each independently a hydroxyl group or a hydrolyzable group.

R¹¹ is preferably, each independently, a hydrolyzable group.

R¹¹ is preferably, each independently, -OR^{h}, -OCOR^{h}, -ON=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R¹² is each independently a monovalent organic group. Such a monovalent organic group is a monovalent organic group excluding the hydrolyzable group.

In R¹², the monovalent organic group is preferably a C₁₋₂₀ alkyl group, more preferably a C₁₋₆ alkyl group, and even more preferably a methyl group.

In the formulae, n1 is an integer of 1 to 3, preferably an integer of 2 to 3, and more preferably 3.

R^{a1} is each independently -Z¹-SiR²¹ₚ₁R²²_{q1}R²³ᵣ₁.

Z¹ is each independently an oxygen atom or a divalent organic group. Below, the right side of the structure denoted as Z¹ binds to (SiR²¹ₚ₁R²²_{q1}R²³ᵣ₁).

In a preferable embodiment, Z¹ is a divalent organic group.

In a preferable embodiment, Z¹ does not form a siloxane bond with the Si atom to which Z¹ binds. Preferably, in the formula (S2), (Si-Z¹-Si) does not contain a siloxane bond.

Z¹ is preferably a C₁₋₆ alkylene group, - (CH₂)_{z1}-O- (CH₂)_{z2}-(wherein z1 is an integer of 0 to 6, such as an integer of 1 to 6, and z2 is an integer of 0 to 6, such as an integer of 1 to 6), or - (CH₂)_{z3}-phenylene- (CH₂)_{z4}- (wherein z3 is an integer of 0 to 6, such as an integer of 1 to 6, and z4 is an integer of 0 to 6, such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z¹ is a C₁₋₆ alkylene group or - (CH₂)_{z3}-phenylene- (CH₂)_{z4}-, and preferably -phenylene-(CH₂)_{z4}-.

In another preferable embodiment, Z¹ is a C₁₋₃ alkylene group. In one embodiment, Z¹ may be -CH₂CH₂CH₂-. In another embodiment, Z¹ may be -CH₂CH₂-.

R²¹ is each independently -Z^{1'}-SiR^{21'}_{p1'}R^{22'}_{q1'}R^{23'}_{r1'}.

Z^{1'} is each independently an oxygen atom or a divalent organic group. Below, the right side of the structure denoted as Z^{1'} binds to (SiR^{21'}_{p1'}R^{22'}_{q1'}R^{23'}_{r1'}).

In a preferable embodiment, Z^{1'} is a divalent organic group.

In a preferable embodiment, Z^{1'} does not form a siloxane bond with the Si atom to which Z^{1'} binds. Preferably, in the formula (S2), (Si-Z^{1'}-Si) does not contain a siloxane bond.

Z^{1'} is preferably a C₁₋₆ alkylene group, -(CH₂)_{z1'}-O-(CH₂)_{z2'}- (wherein z1' is an integer of 0 to 6, such as an integer of 1 to 6, and z2' is an integer of 0 to 6, such as an integer of 1 to 6), or -(CH₂)_{z3'}-phenylene- (CH₂)_{z4'}-(wherein z3' is an integer of 0 to 6, such as an integer of 1 to 6, and z4' is an integer of 0 to 6, such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{1'} is a C₁₋₆ alkylene group or -(CH₂)_{z3'}-phenylene- (CH₂)_{z4'}-, and preferably -phenylene-(CH2) _{z4'}-.

In another preferable embodiment, Z^{1'} is a C₁₋₃ alkylene group. In one embodiment, Z^{1'} may be -CH₂CH₂CH₂-. In another embodiment, Z^{1'} may be -CH₂CH₂-.

R^{21'} is each independently -Z^{1"}-SiR^{22"}_{q1"}R^{23"}_{r1"}.

Z^{1"} is each independently an oxygen atom or a divalent organic group. Below, the right side of the structure denoted as Z^{1"} binds to (SiR^{22"}_{q1"}R^{23"}_{r1"}).

In a preferable embodiment, Z^{1"} is a divalent organic group.

In a preferable embodiment, Z^{1"} does not form a siloxane bond with the Si atom to which Z^{1"} is bonded. Preferably, in the formula (S2), (Si-Z^{1"}-Si) does not contain a siloxane bond.

Z^{1"} is preferably a C₁₋₆ alkylene group, -(CH₂)_{z1"}-O-(CH₂)_{z2"}- (wherein z1" is an integer of 0 to 6, such as an integer of 1 to 6, and z2" is an integer of 0 to 6, such as an integer of 1 to 6), or - (CH₂)_{z3"}-phenylene- (CH₂)_{z4"}-(wherein z3" is an integer of 0 to 6, such as an integer of 1 to 6, and z4" is an integer of 0 to 6, such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{1"} is a C₁₋₆ alkylene group or -(CH₂)_{z3"}-phenylene- (CH₂)_{z4"}-, and preferably -phenylene-(CH₂)_{z4"}-. When Z^{1"} is such a group, light resistance, in particular ultraviolet resistance, can be more increased.

In another preferable embodiment, Z^{1"} is a C₁₋₃ alkylene group. In one embodiment, Z^{1"} may be -CH₂CH₂CH₂-. In another embodiment, Z^{1"} may be -CH₂CH₂-.

R^{22"} is each independently a hydroxyl group or a hydrolyzable group.

R^{22"} is preferably, each independently, a hydrolyzable group.

R^{22"} is preferably, each independently, -OR^{h}, -OCOR^{h}, - O-N=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R^{23"} is each independently a monovalent organic group. Such a monovalent organic group is a monovalent organic group excluding the above hydrolyzable group.

In R^{23"}, the monovalent organic group is preferably a C₁₋₂₀ alkyl group, more preferably a C₁₋₆ alkyl group, and even more preferably a methyl group.

q1" is each independently an integer of 0 to 3, and r1" is each independently an integer of 0 to 3. The sum of q1" and r1" is 3 in the (SiR^{22"}_{q1"}R²³"_{r1"}) unit.

q1" is preferably, each independently, an integer of 1 to 3, more preferably 2 to 3, and even more preferably 3 for each (SiR^{22"}_{q1"}R^{23"}_{r1"}) unit .

R^{22'} is each independently a hydroxyl group or a hydrolyzable group.

R^{22'} is preferably, each independently, a hydrolyzable group.

R^{22'} is preferably, each independently, -OR^{h}, -OCOR^{h}, - O-N=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R^{23'} is each independently a monovalent organic group. Such a monovalent organic group is a monovalent organic group excluding the above hydrolyzable group.

In R^{23'}, the monovalent organic group is preferably a C₁₋₂₀ alkyl group, more preferably a C₁₋₆ alkyl group, and even more preferably a methyl group.

p1' is each independently an integer of 0 to 3, q1' is each independently an integer of 0 to 3, and r1' is each independently an integer of 0 to 3. The sum of p', q1', and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1 to 3, an integer of 2 to 3, or 3 for each (SiR^{21'}_{p1'}R^{22'}_{q1'}R^{23'}_{r1'}) unit. In a preferable embodiment, p1' is 3.

In one embodiment, q1' is each independently an integer of 1 to 3, preferably an integer of 2 to 3, and more preferably 3 for each (SiR^{21'}_{p1'}R^{22'}_{q1'}R^{23'}_{r1'}) unit.

In one embodiment, p1' is 0, and q1' is each independently an integer of 1 to 3, preferably an integer of 2 to 3, and even more preferably 3 for each (SiR^{21'}_{p1'}R^{22'}_{q1'}R^{23'}_{r1'}) unit.

R²² is each independently a hydroxyl group or a hydrolyzable group.

R²² is preferably, each independently, a hydrolyzable group.

R²² is preferably, each independently, -OR^{h}, -OCOR^{h}, -ON=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R²³ is each independently a monovalent organic group. Such a monovalent organic group is a monovalent organic group excluding the hydrolyzable group.

In R²³, the monovalent organic group is preferably a C₁₋₂₀ alkyl group, more preferably a C₁₋₆ alkyl group, and even more preferably a methyl group.

p1 is each independently an integer of 0 to 3, q1 is each independently an integer of 0 to 3, and r1 is each independently an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferable embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and even more preferably 3 for each (SiR²¹ₚ₁R²²_{q1}R²³ᵣ₁) unit.

In the formula, R^{b1} is each independently a hydroxyl group or a hydrolyzable group.

R^{b1} is preferably, each independently, a hydrolyzable group.

R^{b1} is preferably, each independently, -OR^{h}, -OCOR^{h}, -ON=CR^{H} ₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

In the formula, R^{c1} is each independently a monovalent organic group. Such a monovalent organic group is a monovalent organic group excluding the above hydrolyzable group.

In R^{c1}, the monovalent organic group is preferably a C₁₋₂₀ alkyl group, more preferably a C₁₋₆ alkyl group, and even more preferably a methyl group.

k1 is each independently an integer of 0 to 3, l1 is each independently an integer of 0 to 3, and m1 is each independently an integer of 0 to 3. The sum of k1, l1, and m1 is 3 in the (SiR^{a1}ₖ₁R^{b1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferable embodiment, k1 is 3.

In the formula (S2), at least two Si atoms to which a hydroxyl group or a hydrolyzable group is bonded are present.

In a preferable embodiment, in the terminal moiety of the formula (S2), at least two Si atoms to which a hydroxyl group or a hydrolyzable group is bonded are present.

In a preferable embodiment, the group represented by the formula (S2) has any one of -Z¹-SiR²²_{q1}R²³ᵣ₁ (wherein q1 is an integer of 1 to 3, preferably 2 or 3, and more preferably 3, and r1 is an integer of 0 to 2), -Z^{1'}-SiR^{22'}_{q1}-R^{23'}_{r1'} (wherein q1' is an integer of 1 to 3, preferably 2 or 3, and more preferably 3, and r1' is an integer of 0 to 2), or -Z¹"-SiR^{22"}_{q1"}R^{23"}_{r1"} (wherein q1" is an integer of 1 to 3, preferably 2 or 3, and more preferably 3, and r1" is an integer of 0 to 2). Z¹, Z^{1'}, Z^{1"}, R²², R²³, R^{22'}, R^{23'}, R^{22"}, and R^{23"} have the same meanings as those described above.

In a preferable embodiment, when R^{21'} is present in the formula (S2), q1" is an integer of 1 to 3, preferably 2 or 3, and more preferably 3 in at least one, preferably all of R^{21'} groups.

In a preferable embodiment, when R²¹ is present in the formula (S2), p1' is 0, and q1' is an integer of 1 to 3, preferably 2 or 3, and more preferably 3 in at least one, preferably all of R²¹ groups.

In a preferable embodiment, when R^{a1} is present in the formula (S2), p1 is 0, and q1 is an integer of 1 to 3, preferably 2 or 3, and more preferably 3 in at least one, preferably all of R^{a1} groups.

In a preferable embodiment, in the formula (S2), k1 is 2 or 3 and preferably 3, p1 is 0, q1 is 2 or 3 and preferably 3.

R^{d1} is each independently -Z²-CR³¹ₚ₂R³²_{q2}R³³ᵣ₂.

Z² is each independently a single bond, an oxygen atom, or a divalent organic group. Below, the right side of the structure denoted as Z² is bonded to (CR³¹ₚ₂R³²_{q2}R³³ᵣ₂).

In a preferable embodiment, Z² is a divalent organic group.

In a preferable embodiment, Z² does not contain a siloxane bond.

Z² is preferably a C₁₋₆ alkylene group, -(CH₂)_{z5}-O-(CH₂)_{z6}-(wherein z5 is an integer of 0 to 6, such as an integer of 1 to 6, and z6 is an integer of 0 to 6, such as an integer of 1 to 6), or -(CH₂)_{z7}-phenylene-(CH₂)_{z8}- (wherein z7 is an integer of 0 to 6, such as an integer of 1 to 6, and z8 is an integer of 0 to 6, such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z² is a C₁₋₆ alkylene group or -(CH₂)_{z7}-phenylene-(CH₂)_{z8}-, and preferably -phenylene-(CH₂)_{z8}-. When Z² is such a group, light resistance, in particular ultraviolet resistance, can be more increased.

In another preferable embodiment, Z² is a C₁₋₃ alkylene group. In one embodiment, Z² may be -CH₂CH₂CH₂-. In another embodiment, Z² may be -CH₂CH₂-.

R³¹ is each independently -Z^{2'}-CR^{32'}_{q2'}R^{33'}_{r2'}.

Z^{2'} is each independently a single bond, an oxygen atom, or a divalent organic group. Below, the right side of the structure denoted as Z^{2'} binds to (CR^{32'}_{q2'}R^{33'}_{r2'}).

In a preferable embodiment, Z^{2'} does not contain a siloxane bond.

Z^{2'} is preferably a C₁₋₆ alkylene group, -(CH₂)_{z5'}-O-(CH₂)_{z6'}- (wherein z5' is an integer of 0 to 6, such as an integer of 1 to 6, and z6' is an integer of 0 to 6, such as an integer of 1 to 6), or -(CH₂)_{z7'}-phenylene-(CH₂)_{z8'}-(wherein z7' is an integer of 0 to 6, such as an integer of 1 to 6, and z8' is an integer of 0 to 6, such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{2'} is a C₁₋₆ alkylene group or -(CH₂)_{z7'}-phenylene-(CH₂)_{z8'}-, and preferably -phenylene-(CH₂)_{z8'}-. When Z^{2'} is such a group, light resistance, in particular ultraviolet resistance, can be more increased.

In another preferable embodiment, Z^{2'} is a C₁₋₃ alkylene group. In one embodiment, Z^{2'} may be -CH₂CH₂CH₂-. In another embodiment, Z^{2'} may be -CH₂CH₂-.

R^{32'} is each independently -Z³-SiR³⁴ₙ₂R³⁵₃₋ₙ₂.

Z³ is each independently a single bond, an oxygen atom, or a divalent organic group. Below, the right side of the structure denoted as Z³ binds to (SiR³⁴ₙ₂R³⁵₃₋ₙ₂ .

In one embodiment, Z³ is an oxygen atom.

In one embodiment, Z³ is a divalent organic group.

In a preferable embodiment, Z³ does not contain a siloxane bond.

Z³ is preferably a C₁₋₆ alkylene group, - (CH₂)_{z5"}-O-(CH₂)_{z6"}- (wherein z5" is an integer of 0 to 6, such as an integer of 1 to 6, and z6" is an integer of 0 to 6, such as an integer of 1 to 6), or - (CH₂)_{z7"}-phenylene-(CH₂)_{z8"}-(wherein z7" is an integer of 0 to 6, such as an integer of 1 to 6, and z8" is an integer of 0 to 6, such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z³ is a C₁₋₆ alkylene group or - (CH₂)_{z7}-phenylene-(CH₂)_{z8"}-, and preferably -phenylene-(CH₂)_{z8"}-. When Z³ is such a group, light resistance, in particular ultraviolet resistance, can be more increased.

In another preferable embodiment, Z³ is a C₁₋₃ alkylene group. In one embodiment, Z³ may be -CH₂CH₂CH₂-. In another embodiment, Z³ may be -CH₂CH₂-.

R³⁴ is each independently a hydroxyl group or a hydrolyzable group.

R³⁴ is preferably, each independently, a hydrolyzable group.

R³⁴ is preferably, each independently, -OR^{h}, -OCOR^{H}, -ON=CR^{h}₂, -NR^{h}₂, -NHR^{h}, -NCO, or a halogen (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R³⁵ is each independently a monovalent organic group. Such a monovalent organic group is a monovalent organic group excluding the above hydrolyzable group.

In R³⁵, the monovalent organic group is preferably a C₁₋₂₀ alkyl group, more preferably a C₁₋₆ alkyl group, and even more preferably a methyl group.

n2 is each independently an integer of 0 to 3 for each (SiR³⁴ₙ₂R³⁵₃₋ₙ₂) unit, provided that, in the terminal moiety of the formula (S3), at least two (SiR³⁴ₙ₂R³⁵₃₋ₙ₂) units wherein n2 is 1 to 3 are present. In other words, in the terminal moiety of the formula (S3), at least two Si atoms to which a hydroxyl group or a hydrolyzable group is bonded are present.

n2 is each independently an integer of preferably 1 to 3, more preferably 2 to 3, and even more preferably 3 for each (SiR³⁴ₙ₂R³⁵₃₋ₙ₂) unit.

R^{33'} is each independently a hydrogen atom, a hydroxyl group, or a monovalent organic group. Such a monovalent organic group is a monovalent organic group excluding the hydrolyzable group.

In R^{33'}, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

q2' is each independently an integer of 0 to 3, and r2' is each independently an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, and even more preferably 3 for each (CR^{32'}_{q2'}R^{33'}_{r2'}) unit.

R³² is each independently -Z³-SiR³⁴ₙ₂R³⁵₃₋ₙ₂. Such -Z³-SiR³⁴ₙ₂R³⁵₃₋ₙ₂ has the same meanings as those described for R^{32'}.

R³³ is each independently a hydrogen atom, a hydroxyl group, or a monovalent organic group. Such a monovalent organic group is a monovalent organic group excluding the above hydrolyzable group.

In R³³, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

p2 is each independently an integer of 0 to 3, q2 is each independently an integer of 0 to 3, and r2 is each independently an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferable embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and even more preferably 3 for each (CR³¹ₚ₂R³²_{q2}R³³ᵣ₂) unit.

R^{e1} is each independently -Z³-SiR³⁴ₙ₂R³⁵₃₋ₙ₂. Such -Z³-SiR³⁴ₙ₂R³⁵₃₋ₙ₂ has the same meanings as those described for R^{32'}.

R^{f1} is each independently a hydrogen atom, a hydroxyl group, or a monovalent organic group. Such a monovalent organic group is a monovalent organic group excluding the above hydrolyzable group.

In R^{f1}, the monovalent organic group is preferably a C₁₋₂₀ alkyl group or - (CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R^{f1} is a hydroxyl group.

In another embodiment, R^{f1} is a monovalent organic group, preferably a C₁₋₂₀ alkyl group, and more preferably a C₁₋₆ alkyl group.

k2 is each independently an integer of 0 to 3, l2 is each independently an integer of 0 to 3, and m2 is each independently an integer of 0 to 3. The sum of k2, l2, and m2 is 3 in the (CR^{d1}ₖ₂R^{e1}ₗ₂R^{f1}ₘ₂) unit.

In one embodiment, two or more, such as 2 to 27, preferably 2 to 9, more preferably 2 to 6, even more preferably 2 to 3, and particularly preferably 3 (SiR³⁴ₙ₂R³⁵₃₋ₙ₂) units in which n2 is 1 to 3, preferably 2 or 3, and more preferably 3 are present in each terminal moiety of the formula (S3).

In a preferable embodiment, when R^{32'} is present in the formula (S3), n2 is an integer of 1 to 3, preferably 2 or 3, and more preferably 3 in at least one, preferably all of R^{32'} groups.

In a preferable embodiment, when R³² is present in the formula (S3), n2 is an integer of 1 to 3, preferably 2 or 3, and more preferably 3 in at least one, preferably all of R³² groups.

In a preferable embodiment, when R^{e1} is present in the formula (S3), n2 is an integer of 1 to 3, preferably 2 or 3, and more preferably 3 in at least one, preferably all of R^{a1} groups.

In a preferable embodiment, k2 is 0, l2 is 2 or 3 and preferably 3, and n2 is 2 or 3 and preferably 3 in the formula (S3).

R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, l1, m1, k2, l2, and m2 have the same meanings as those described above.

In a preferable embodiment, R^{g1} and R^{h1} are each independently -Z⁴-SiR¹¹ₙ₁R¹²₃₋ₙ₁.

Z⁴ is each independently a single bond, an oxygen atom, or a divalent organic group. Below, the right side of the structure denoted as Z⁴ binds to (SiR¹¹ₙ₁R¹²₃₋ₙ₁).

In one embodiment, Z⁴ is an oxygen atom.

In one embodiment, Z⁴ is a divalent organic group.

In a preferable embodiment, Z⁴ does not contain a siloxane bond.

Z⁴ is preferably a C₁₋₆ alkylene group, - (CH₂)_{z5"}-O-(CH₂)_{z6"}- (wherein z5" is an integer of 0 to 6, such as an integer of 1 to 6, and z6" is an integer of 0 to 6, such as an integer of 1 to 6), or - (CH₂)_{z7"}-phenylene- (CH₂)_{z8"}-(wherein z7" is an integer of 0 to 6, such as an integer of 1 to 6, and z8" is an integer of 0 to 6, such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z⁴ is a C₁₋₆ alkylene group or -(CH₂)_{z7"}-phenylene-(CH₂)_{z8"}-, and preferably -phenylene-(CH₂)_{z8"}-. When Z³ is such a group, light resistance, in particular ultraviolet resistance, can be more increased.

In another preferable embodiment, Z⁴ is a C₁₋₃ alkylene group. In one embodiment, Z⁴ may be -CH₂CH₂CH₂-. In another embodiment, Z⁴ may be -CH₂CH₂-.

In one embodiment, the formulae (S1), (S2), (S3), and (S4) do not contain a siloxane bond.

In one embodiment, R^{Si} is a group represented by the formula (S2), (S3), or (S4).

In one embodiment, R^{Si} is a group represented by the formula (S3), (S4), or (S5).

In one embodiment, R^{Si} is a group represented by the formula (S1). In a preferable embodiment, n1 is 1 to 3, preferably 2 to 3, and even more preferably 3.

In one embodiment, R^{Si} is a group represented by the formula (S2). In a preferable embodiment, the formula (S2) is -SiR^{a1}₂R^{c1} or -SiR^{a1}₃, R^{a1} is -Z¹-SiR²²_{q1}R²³ᵣ₁, Z¹ is a C₁₋₆ alkylene group, -(CH₂)_{z1}-O-(CH₂)_{z2}- (wherein z1 is an integer of 0 to 6, such as an integer of 1 to 6, and z2 is an integer of 0 to 6, such as an integer of 1 to 6), or -(CH₂)_{z3}-phenylene-(CH₂)_{z4}- (wherein z3 is an integer of 0 to 6, such as an integer of 1 to 6, and z4 is an integer of 0 to 6, such as an integer of 1 to 6), preferably a C₁₋₆ alkylene group, and q1 is 1 to 3, preferably 2 to 3, and even more preferably 3.

In one embodiment, R^{Si} is a group represented by the formula (S3). In a preferable embodiment, the formula (S3) is -CR^{e1}₂R^{f1} or -CR^{e1}₃, R^{e1} is -Z³-SiR³⁴ₙ₂R³⁵₃₋ₙ₂, Z³ is a C₁₋₆ alkylene group, - (CH₂)_{z5"}-O- (CH₂)_{z6"}- (wherein z5" is an integer of 0 to 6, such as an integer of 1 to 6, and z6" is an integer of 0 to 6, such as an integer of 1 to 6), or - (CH₂)_{z7"}-phenylene-(CH₂)_{z8"}- (wherein z7" is an integer of 0 to 6, such as an integer of 1 to 6, and z8" is an integer of 0 to 6, such as an integer of 1 to 6), preferably a C₁₋₆ alkylene group, and n2 is 1 to 3, preferably 2 to 3, and even more preferably 3.

In one embodiment, R^{Si} is a group represented by the formula (S4). In a preferable embodiment, R^{g1} and R^{h1} are - Z⁴-SiR¹¹ₙ₁R¹²₃₋ₙ₁, Z⁴ is a C₁₋₆ alkylene group, - (CH₂)_{z5"}-O-(CH₂)_{z6"}- (wherein z5" is an integer of 0 to 6, such as an integer of 1 to 6, and z6" is an integer of 0 to 6, such as an integer of 1 to 6), or - (CH₂)_{z7"}-phenylene-(CH₂)_{z8"}-(wherein z7" is an integer of 0 to 6, such as an integer of 1 to 6, and z8" is an integer of 0 to 6, such as an integer of 1 to 6), preferably a C₁₋₆ alkylene group, and n1 is 1 to 3, preferably 2 to 3, and even more preferably 3.

The compound represented by the formula (1) can be produced by the following method.

First, an unsaturated carboxylic acid or an unsaturated carboxylic acid ester such as a compound represented by the formula:

CH₂=CH-R⁷¹-COOR⁷²

[wherein
R⁷¹ is an alkylene group having 9 or more carbon atoms, and
R⁷² is a hydrogen atom or a C₁₋₆ alkyl group]

is reacted with a silane compound such as a compound represented by the formula:

   R³-(SiR⁴₂O)-SiR⁴₂-H

   [wherein
   R³ is a C₁₋₁₂ alkyl group,
   R⁴ is each independently a C₁₋₁₂ alkyl group, and
   n is 0 to 1,500]
to give a compound represented by the formula:
   R³-(SiR⁴₂O)ₙ-SiR⁴₂-CH₂CH₂-R⁷¹-COOR⁷². Then, the resulting compound is reacted with an amine derivative having a carbon-carbon double bond at a terminal, such as a compound represented by the formula:

   NH₂-R⁷³

   [wherein
   R⁷³ is -R⁷⁴-CH=CH₂ or -R⁷⁵(-R⁷⁴-CH=CH₂)₃,
   R⁷⁴ is a single bond or a C₁₋₆ alkylene group,
   R⁷⁵ is -R⁷⁶-C, and
   R⁷⁶ is a single bond or a C₁₋₆ alkylene group,
to give a compound represented by:
   R³-(SiR⁴₂O)ₙ-SiR⁴₂-CH₂CH₂-R⁷¹-CONH₂-R⁷⁴-CH=CH₂, or
   R³-(SiR⁴₂O)ₙ-SiR⁴₂-CH₂CH₂-R⁷¹-CONH₂-R⁷⁵(-R⁷⁴-CH=CH₂)₃. Eventually, the compound obtained above is reacted with, for example, a compound represented by the formula HSi(R⁷⁷)₃ [wherein R⁷⁷ is a hydrolyzable group],
and thus the compound represented by the formula (1) can be obtained.

Next, the surface-treating agent of the present invention will now be described.

The surface-treating agent of the present disclosure contains at least one compound represented by the formula (1).

In one embodiment, the surface-treating agent of the present disclosure is at least one compound itself that is represented by the formula (1).

In one embodiment, the content of the compound represented by the formula (1) is preferably 0.1 to 50.0% by mass, more preferably 1.0 to 30.0% by mass, even more preferably 5.0 to 25.0% by mass, and particularly preferably 10.0 to 20.0% by mass based on the entirety of the surface-treating agent.

In another embodiment, the content of the compound represented by the formula (1) is preferably 0.001 to 30% by mass, more preferably 0.01 to 10% by mass, even more preferably 0.05 to 5% by mass, and particularly preferably 0.05 to 2% by mass based on the entirety of the surface-treating agent.

In one embodiment, the surface-treating agent of the present disclosure may contain at least one of the compound of the present disclosure and a condensate obtained by at least partially condensing the compound of the present disclosure.

In the above embodiment, the content of the condensate may be preferably 40% by mass or less and more preferably 30% by mass or less based on the sum of the silane compound and the condensate. Here, the content of the condensate can be determined from, for example, the abundance ratio of the peak position to the area in GPC (gel permeation chromatography).

The surface-treating agent of the present disclosure may contain a solvent, a (non-reactive) silicone compound that may be understood as a silicone oil (hereinafter, referred to as "silicone oil"), an amine compound, an alcohol, a catalyst, a surfactant, a polymerization inhibitor, a sensitizer, and the like.

In one embodiment, the surface-treating agent of the present disclosure contains a compound represented by R⁹⁰-OH.

R⁹⁰ is a monovalent organic group and is preferably a C₁₋₂₀ alkyl group or a C₃₋₂₀ alkylene group, and these groups may be substituted with one or more substituents. Examples of substituents include a hydroxyl group and -OR⁹¹ wherein R⁹¹ is a C₁₋₁₀ alkyl group, preferably a C₁₋₃ alkyl group, such as a methyl group.

In one embodiment, the surface-treating agent of the present disclosure may contain a solvent selected from compounds represented by R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉, wherein
R⁸¹ to R⁸⁹ are each independently a monovalent organic group having 1 to 10 carbon atoms,
m8 is an integer of 1 to 6,
m9 is an integer of 3 to 8, and
n8 is an integer of 0 to 6.

The monovalent organic group having 1 to 10 carbon atoms may be linear or branched, and may further contain a cyclic structure.

In one embodiment, the monovalent organic group having 1 to 10 carbon atoms may contain an oxygen atom, a nitrogen atom, or a halogen atom.

In another embodiment, the monovalent organic group having 1 to 10 carbon atoms does not contain a halogen atom.

In a preferable embodiment, the monovalent organic group having 1 to 10 carbon atoms is a hydrocarbon group optionally substituted with a halogen atom, and preferably a hydrocarbon group not substituted with a halogen atom.

In one embodiment, the hydrocarbon group is linear.

In another embodiment, the hydrocarbon group is branched.

In another embodiment, the hydrocarbon group contains a cyclic structure.

In one embodiment, the solvent is R⁸¹OR⁸².

R⁸¹ and R⁸² may be, each independently, preferably a hydrocarbon group having 1 to 8 carbon atoms, and more preferably a C₁₋₆ alkyl group or a C₅₋₈ cycloalkyl group.

In one embodiment, the solvent is R⁸³ₙ₈C₆H₆₋ₙ₈.

C₆H₆₋ₙ₈ is an n8-valent benzene ring. That is, R⁸³ₙ₈C₆H₆-ₙ₈ is benzene substituted with n8 R⁸³.

R⁸³ may be each independently a halogen atom, or a C₁₋₆ alkyl group optionally substituted with a halogen atom.

n8 is preferably an integer of 1 to 3.

In one embodiment, the solvent is R⁸⁴R⁸⁵R⁸⁶Si-(O-SiR⁸⁷R⁸⁸)ₘ₈-R⁸⁹.

In one embodiment, the solvent is (OSiR⁸⁷R⁸⁸)₉. (OSiR⁸⁷R⁸⁸)ₘ₉ is a cyclic siloxane formed by multiple OSiR⁸⁷R⁸⁸ units bonded in a cyclic form.

R⁸⁴ to R⁸⁹ are each independently a hydrogen atom or a C₁₋₆ alkyl group, preferably a C₁₋₆ alkyl group, more preferably a C₁₋₃ alkyl group, and even more preferably a methyl group.

m8 is preferably an integer of 1 to 6, more preferably an integer of 1 to 5, and even more preferably 1 to 2.

m9 is preferably an integer of 3 to 6, and more preferably an integer of 3 to 5.

In one embodiment, examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine-containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine-containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec (TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent of two or more of such solvents. In particular, preferable are aliphatic hydrocarbons, esters, glycol ethers, alcohols, ether alcohols, and siloxanes. For example, preferable are hexane, cyclohexane, heptane, octane, nonane, decane, undecane, dodecane, mineral spirits, methyl acetate, ethyl acetate, propyl acetate, n-butyl acetate, isopropyl acetate, isobutyl acetate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane. Moreover, particularly preferable are diethylene glycol monoethyl ether, diethylene glycol monomethyl ether, diethylene glycol dimethyl ether, diethylene glycol ethyl methyl ether, diethylene glycol diethyl ether, 2-ethoxyethanol, 1,2-diethoxyethane, 2-methoxyethanol, tetraethylene glycol dimethyl ether, diethylene glycol dibutyl ether, diethylene glycol monohexyl ether, and methoxycyclopentane.

Examples of the silicone oil include, but are not limited to, compounds represented by the following general formula (3a):

R^{1a}-(SiR^{3a}₂-O)ₐ₁-SiR^{3a}₂-R^{1a} (3a)

wherein
R^{1a} is each independently a hydrogen atom or a hydrocarbon group,
R^{3a} is each independently a hydrogen atom or a hydrocarbon group, and
a1 is 2 to 3,000.

R^{3a} is each independently a hydrogen atom or a hydrocarbon group. Such a hydrocarbon group may be substituted.

R^{3a} is, each independently, preferably an unsubstituted hydrocarbon group or a hydrocarbon group substituted with a halogen atom. Such a halogen atom is preferably a fluorine atom.

R^{3a} is, each independently, preferably a C₁₋₆ alkyl group or aryl group optionally substituted with a halogen atom, and more preferably a C₁₋₆ alkyl group or aryl group.

The C₁₋₆ alkyl group may be linear or may be branched, and is preferably linear. The C₁₋₆ alkyl group is preferably a C₁₋₃ alkyl group, and more preferably a methyl group.

The aryl group is preferably a phenyl group.

In one embodiment, R^{3a} is each independently a C₁₋₆ alkyl group, preferably a C₁₋₃ alkyl group, and more preferably a methyl group.

In another embodiment, R^{3a} is a phenyl group.

In another embodiment, R^{3a} is a methyl group or a phenyl group, and preferably a methyl group.

R^{1a} is each independently a hydrogen atom or a hydrocarbon group, and has the same meanings as those described for R^{3a}.

R^{1a} is, each independently, preferably a C₁₋₆ alkyl group or aryl group optionally substituted with a halogen atom, and more preferably a C₁₋₆ alkyl group or aryl group.

In one embodiment, R^{1a} is each independently a C₁₋₆ alkyl group, preferably a C₁₋₃ alkyl group, and more preferably a methyl group.

In another embodiment, R^{1a} is a phenyl group.

In another embodiment, R^{1a} is a methyl group or a phenyl group, and preferably a methyl group.

a1 is 2 to 1,500. a1 may be preferably 5 or more, more preferably 10 or more, and even more preferably 15 or more, such as 30 or more or 50 or more. a1 may be preferably 1,000 or less, more preferably 500 or less, even more preferably 200 or less, and even more preferably 150 or less, such as 100 or less or 80 or less.

a1 may be preferably 5 to 1,000, more preferably 10 to 500, even more preferably 15 to 200, and even more preferably 15 to 150.

Other examples of the silicone oil include compounds represented by (3b) below:

R^{1a}-R^{S2}-R^{3a} (3b)

wherein
R^{1a} is each independently a hydrocarbon group,
R^{3a} is each independently a hydrocarbon group,
R^{S2} is -R^{SO}-SiR⁵₂-,
R^{SO} is each independently a group represented by the following formula: 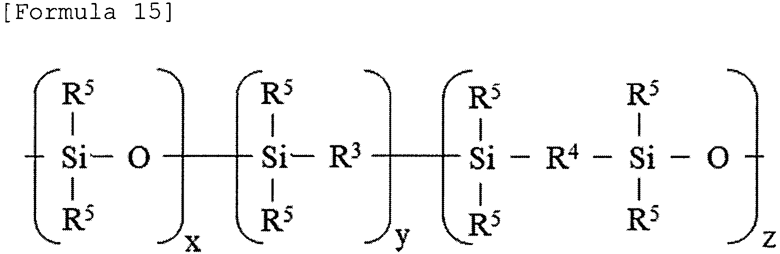 wherein
   R³ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁶ is each independently a C₁₋₆ alkylene group,
   R⁷ is each independently an optionally substituted phenylene group or naphthylene group,
   R⁸ is each independently a single bond or a C₁₋₆ alkylene group,
   R⁹ is each independently a single bond or an oxygen atom,
      R⁵ is each independently a hydrocarbon group,
   x is an integer of 0 to 200,
   y is an integer of 0 to 200,
   z is an integer of 0 to 200,
   x + y + z is 1 or more, and
   the respective repeating units enclosed in parentheses provided with x, y, or z occur in any order in the formula.

The silicone oil may have an average molecular weight of 500 to 1,000,000, and preferably 1,000 to 100,000. The molecular weight of the silicone oil may be measured using GPC.

The silicone oil may be, for example, a linear or cyclic silicone oil in which a1 in -(SiR^{3a}₂-O)ₐ₁- is 30 or less. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

The silicone oil may be contained in an amount of, for example, 0 to 50% by mass, preferably 0.001 to 30% by mass, and more preferably 0.1 to 5% by mass based on the surface-treating agent of the present disclosure.

In the surface-treating agent of the present disclosure, the silicone oil may be contained in an amount of, for example, 0 to 300 parts by mass, preferably 0 to 100 parts by mass, more preferably 0 to 50 parts by mass, and even more preferably 0 to 10 parts by mass, based on total 100 parts by mass of the compound of the present disclosure (in the case of two or more kinds, the total thereof, and the same applies below).

The silicone oil contributes to increasing the surface lubricity of the surface-treating layer.

Examples of the alcohol include methanol, ethanol, iso-propanol, n-butanol, isobutanol, tert-butanol, sec-butanol, 3-pentanol, octyl alcohol, 3-methyl-3-methoxybutanol, and tert-amyl alcohol. Such an alcohol added to the surface-treating agent increases the stability of the surface-treating agent.

Examples of the catalyst include acids (for example, acetic acid, hydrochloric acid, nitric acid, sulfuric acid, phosphoric acid, sulfonic acid, p-toluenesulfonic acid, trifluoroacetic acid, and the like), bases (for example, sodium hydroxide, potassium hydroxide, ammonia, triethylamine, diethylamine, and the like), transition metals (for example, Ti, Ni, Sn, Zr, Al, B, Si, Ta, Nb, Mo, W, Cr, Hf, V, and the like), and sulfur-containing compounds or nitrogen-containing compounds having an unshared electron pair in the molecular structure (for example, sulfoxide compounds, aliphatic amine compounds, aromatic amine compounds, phosphoric acid amide compounds, amide compounds, and urea compounds).

Examples of the aliphatic amine compound include diethylamine and triethylamine. Examples of the aromatic amine compound include aniline and pyridine.

In a preferable embodiment, the transition metal is contained as a transition metal compound represented by M-R, wherein M is a transition metal atom and R is a hydrolyzable group. By using a compound obtained by bonding a transition metal and a hydrolyzable group as the transition metal compound, the transition metal atom can be contained in the surface-treating layer more efficiently, and the abrasion durability and the chemical resistance of the surface-treating layer can be more increased.

The hydrolyzable group means a group that can undergo a hydrolysis reaction in the same manner as the hydrolyzable group concerning the above compound, i.e., means a group that can be removed from the transition metal atom by a hydrolysis reaction. Examples of the hydrolyzable group include -OR^{m}, -OCOR^{m}, -O-N=CR^{m}₂, -NR^{m}₂, -NHR^{m}, -NCO, and a halogen (in these formulae, R^{m} represents a substituted or unsubstituted C₁₋₄ alkyl group).

In a preferable embodiment, the hydrolyzable group is -OR^{m}, and preferably methoxy or ethoxy. By using an alkoxy group as the hydrolyzable group, the transition metal atom can be contained in the surface-treating layer more efficiently, and the abrasion durability and the chemical resistance of the surface-treating layer can be more increased.

In one embodiment, the hydrolyzable group may be the same as the hydrolyzable group contained in the above compound. By causing the hydrolyzable groups in the compound and in the transition metal compound to be the same group, the influence of such hydrolyzable groups being mutually exchanged, if ever, can be minimized.

In another embodiment, the hydrolyzable group may be different from the hydrolyzable group contained in the above compound. By causing the hydrolyzable groups in the above compound and in the transition metal compound to be different, the reactivity of hydrolysis can be controlled.

In one embodiment, the above hydrolyzable group and the hydrolyzable group contained in the above compound may be mutually exchanged in the surface-treating agent.

In a preferable embodiment, the transition metal compound may be Ta(OR^{m})₅ (wherein R^{m} is a substituted or unsubstituted C₁₋₄ alkyl group), preferably Ta(OCH₂CH₃)₅ or Si(OR^{m})₁₋ₘ₁R^{m'}ₘ₁ (wherein R^{m} is a substituted or unsubstituted C₁₋₄ alkyl group, R^{m'} is a C₁₋₄ alkyl group, and m1 is 0 or 1), and preferably tetraethoxysilane, methyltrimethoxysilane, methyltriethoxysilane, tetraisopropoxysilane, dimethyldiethoxysilane, or dimethyldimethoxysilane.

The catalyst may be contained in an amount of, for example, 0.0002% by mass or more based on the entirety of the surface-treating agent. The catalyst may be contained in an amount of preferably 0.02% by mass or more, and more preferably 0.04% by mass or more, based on the entirety of the surface-treating agent. The catalyst may be contained in an amount of, for example, 10% by mass or less based on the entirety of the surface-treating agent, and in particular, is contained in an amount of 1% by mass or less. The surface-treating agent of the present disclosure can contribute to the formation of a surface-treating layer having better durability when the catalyst is contained in the concentration as described above.

The content of the catalyst is preferably 0 to 10% by mass, more preferably 0 to 5% by mass, and particularly preferably 0 to 1% by mass, based on the compound of the present disclosure.

The catalyst promotes hydrolysis and dehydrative condensation of the compound of the present disclosure, and promotes formation of a layer formed of the surface-treating agent of the present disclosure.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The surface-treating agent of the present disclosure may contain, in addition to the components described above, trace amounts of Pt, Rh, Ru, 1,3-divinyltetramethyldisiloxane, triphenylphosphine, NaCl, KCl, silane condensates, and the like as impurities.

In one embodiment, the surface-treating agent of the present disclosure is for a dry coating method, preferably for vacuum deposition.

In one embodiment, the surface-treating agent of the present disclosure is for a wet coating method, preferably for dip coating.

The surface-treating agent of the present disclosure can be formed into pellets by impregnating a porous material such as a porous ceramic material or a metal fiber such as a fiber obtained by, for example, solidifying steel wool in a cotton-like form with the surface-treating agent. Such pellets can be used in, for example, vacuum deposition.

Below, the article of the present disclosure will now be described.

The article of the present disclosure includes a substrate and a layer (a surface-treating layer) on the substrate surface, the layer being formed of the surface-treating agent of the present disclosure.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film), such as a hard coat layer or an antireflection layer, may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₃, Al₂O₃, Ta₂O₃, Ta₃O₃, Nb₂O₃, HfO₂, Si₃N₄, CeO₂, MgO, Y₂O₃, SnO₂, MgF₂, and WO₃. One of these inorganic substances may be used singly, or two or more kinds thereof may be used in combination (for example, as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The form of the substrate is not limited, and may be, for example, a plate, a film, or the like. The surface region of the substrate on which a surface-treating layer is to be formed may be at least a portion of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) that forms a natural oxidized film or a thermal oxidized film on its surface, ceramics, and semiconductors. Alternatively, when the substrate has an insufficient amount of hydroxyl groups or when the substrate originally has no hydroxyl group as in resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere containing oxygen, nitrogen, or the like.

In another embodiment, the substrate, or at least the surface portion thereof, may be composed of a material comprising another reactive group such as a silicone compound having one or more Si-H groups or alkoxysilane.

In a preferable embodiment, the substrate is glass. Such glass is preferably sapphire glass, soda-lime glass, alkali aluminosilicate glass, borosilicate glass, alkali-free glass, crystal glass, or quartz glass, and is particularly preferably chemically strengthened soda-lime glass, chemically strengthened alkali aluminosilicate glass, or chemically bonded borosilicate glass.

In one embodiment, the article of the present disclosure may include a silicon oxide-containing intermediate layer between glass and the surface-treating layer. By providing such an intermediate layer, adhesion between glass and the surface-treating layer is increased, and durability is increased.

In a preferable embodiment, the intermediate layer may contain an alkali metal in addition to silicon oxide.

Examples of the alkali metal include lithium, sodium, and potassium. The alkali metal is preferably sodium.

The thickness of the intermediate layer is not limited, and is preferably 1 to 200 nm and particularly preferably 1 to 20 nm. By causing the thickness of the intermediate layer to be at the lower limit of the above range or greater, the effect of increasing adhesion provided by the intermediate layer is more increased.

The concentration of alkali metal atoms in the intermediate layer can be measured by various surface analysis apparatuses such as TOF-SIMS, XPS, and XRF.

The proportion of alkali metal atoms to all atoms in the entirety of the intermediate layer can be obtained by XPS depth profile analysis using ion sputtering, wherein measurement by XPS and surface etching by ion sputtering using an ion gun provided in an XPS apparatus are alternately performed.

In the intermediate layer, the average alkali metal concentration in a region having a depth of 1 nm or less from the surface that is in contact with the surface-treating layer is determined by obtaining a depth profile of the alkali metal atom concentration by TOF-SIMS (time-of-flight secondary ion mass spectrometry) depth analysis using ion sputtering, and then calculating the average alkali metal atom concentration in the profile. TOF-SIMS depth profile analysis by ion sputtering is performed by alternately repeating measurement by TOF-SIMS and surface etching by ion sputtering using an ion gun provided in a TOF-SIMS apparatus.

The article of the present disclosure can be produced by forming a layer of the surface-treating agent of the present disclosure on the surface of the substrate and post-treating this layer as necessary, thereby forming a layer from the surface-treating agent of the present disclosure.

The layer of the surface-treating agent of the present disclosure can be formed by applying the surface-treating agent to the surface of the substrate so as to coat the surface. The coating method is not limited. For example, a wet coating method and a dry coating method can be used.

Examples of the wet coating method include dip coating, spin coating, flow coating, spray coating, roll coating, gravure coating, wipe coating, squeegee coat method, die coat, inkjet, cast method, Langmuir-Blodgett method, and similar methods.

Examples of the dry coating method include deposition (usually, vacuum deposition), sputtering, CVD, and similar methods. Specific examples of the deposition method (usually, a vacuum deposition method) include resistive heating, highfrequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of the solvent, the following solvents are preferably used: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine-containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine-containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec (TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. One of these solvents may be used singly, or two or more may be used as a mixture. In particular, preferable are aliphatic hydrocarbons, esters, glycol ethers, alcohols, ether alcohols, and siloxanes. For example, particularly preferable are hexane, cyclohexane, heptane, octane, nonane, decane, undecane, dodecane, mineral spirits, methyl acetate, ethyl acetate, propyl acetate, n-butyl acetate, isopropyl acetate, isobutyl acetate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane. Moreover, particularly preferable are diethylene glycol monoethyl ether, diethylene glycol monomethyl ether, diethylene glycol dimethyl ether, diethylene glycol ethyl methyl ether, diethylene glycol diethyl ether, 2-ethoxyethanol, 1,2-diethoxyethane, 2-methoxyethanol, tetraethylene glycol dimethyl ether, diethylene glycol dibutyl ether, diethylene glycol monohexyl ether, and methoxycyclopentane.

When using the dry coating method, the surface-treating agent of the present disclosure may be directly subjected to the dry coating method, or may be diluted with the solvent before being subjected to the dry coating method.

A layer of the surface-treating agent is preferably formed such that the surface-treating agent of the present disclosure coexists in the layer with a catalyst for hydrolysis and dehydrative condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used in a deposition (usually vacuum deposition) treatment, or a pellet-like material may be used in a deposition (usually vacuum deposition) treatment, wherein pellets are obtained by impregnating a porous body of metal such as iron or copper with the surface-treating agent of the present disclosure to which the catalyst has been added.

The catalyst may be any suitable acid or base, transition metal (such as Ti, Ni, Sn, Zr, Al, or B), sulfurcontaining compound or nitrogen-containing compound having an unshared electron pair in the molecular structure (such as a sulfoxide compound, an aliphatic amine compound, an aromatic amine compound, a phosphoric acid amide compound, an amide compound, or an urea compound), or the like. The acid catalyst may be, for example, acetic acid, formic acid, trifluoroacetic acid, hydrochloric acid, nitric acid, sulfuric acid, phosphoric acid, sulfonic acid, methanesulfonic acid, or p-toluenesulfonic acid. Also, the base catalyst may be, for example, ammonia, sodium hydroxide, potassium hydroxide, or an organic amine such as triethylamine or diethylamine. Examples of the transition metals aliphatic amine compound, and aromatic amine compound include the same as those described above.

The surface-treating layer included in the article of the present disclosure has both high abrasion durability and fingerprint removability by wiping. Moreover, the surface-treating layer may have not only high abrasion durability but also have, depending on the composition of the surface-treating agent used, water-repellency, oil-repellency, antifouling properties (e.g., preventing grime such as fingerprints from adhering), waterproof properties (preventing water from entering electronic components and the like), surface lubricity (or lubricity, for example, such as removability by wiping of grime such as fingerprints, and excellent tactile sensations to the fingers), chemical resistance, and the like, and may be suitably used as a functional thin film.

Accordingly, the present disclosure further relates to an optical material having the surface-treating layer as the outermost layer.

The optical material preferably includes a wide variety of optical materials, in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray(R) discs, DVD discs, CD-Rs, and MOs; optical fibers; and display surfaces of watches and clocks.

The article of the present disclosure may be medical equipment or a medical material. The article having a layer that is obtained according to the present disclosure may be an automobile interior or exterior member. Examples of the exterior material are as follows: windows, light covers, and external camera covers. Examples of the interior material include the following: instrument panel covers, navigation system touch panels, and decorative interior materials.

The thickness of the layer is not limited. The thickness of the layer in the case of an optical member is in the range of 1 to 50 nm, 1 to 30 nm, and preferably 1 to 15 nm, from the viewpoint of optical performance, abrasion durability, and antifouling properties.

The apparatus for performing X-ray photoelectron spectroscopy for measuring the atomic composition and the ratio of constitutional atoms of the surface-treating layer may be XPS or PHI 5000 VersaProbe II manufactured by ULVAC-PHI, Inc. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and sputtering with a gas cluster ion beam or Ar ions. The compositions of the surface-treating layer and the intermediate layer can be determined by observing the peak areas of C1s, O1s, and Si2p under the above apparatus and measurement conditions, and calculating the atomic ratio of carbon, oxygen, and silicon.

Also, depth profile analysis may be performed as well. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and Ar ions, gas cluster ions, C60 ions, or the like as sputtering ions. Etching may be performed to 1 to 100 nm by sputtering, and the composition in the coating film at each etching depth may be obtained as well.

By adjusting the photoelectron detection angle of the XPS analysis, the detection depth can be suitably adjusted. For example, a shallow angle close to 20 degrees allows a detection depth of about 3 nm, while a deep angle close to 90 degrees allows a detection depth of about 10 and several nanometers.

The silicon oxide-containing intermediate layer described above can be formed by applying a silicon oxide precursor to the substrate surface. When the intermediate layer contains an alkali metal, the intermediate layer can be formed by applying a composition containing a silicon oxide precursor and an alkali metal source to the substrate surface.

Examples of the silicon oxide precursor include silicic acid, a partial condensate of silicic acid, an alkali metal silicate, a silane compound having a hydrolyzable group that is bonded to a silicon atom, and a partially hydrolyzed condensate of such a silane compound. Silicic acid and a partial condensate thereof can be converted to silicon oxide by dehydrative condensation, and an alkali metal silicate can be converted to silicon oxide by being converted first to silicic acid or a partial condensate thereof with an acid or a cation exchange resin and then dehydratively condensing the resulting silicic acid or partial condensate thereof. Examples of the hydrolyzable group in the silane compound having a hydrolyzable group that is bonded to a silicon atom include an alkoxy group and a chlorine atom. The hydrolyzable group of the silane compound can be hydrolyzed to give a hydroxyl group, and the resulting silanol compound can be dehydratively condensed to give silicon oxide. Examples of the silane compound having a hydrolyzable group that is bonded to a silicon atom include alkoxysilanes such as tetraalkoxysilane and alkyltrialkoxysilane, and tetrachlorosilane.

The alkali metal source includes alkali metal hydroxides, water-soluble alkali metal salts, and the like. Examples of the water-soluble alkali metal salts include alkali metal carbonates, alkali metal hydrogen carbonates, alkali metal hydrochlorides, and alkali metal nitrates. The alkali metal source is preferably an alkali metal hydroxide and an alkali metal carbonate.

Note that the alkali metal silicate can be used as a silicon oxide precursor and an alkali metal source. The alkali metal silicate can be converted to silicon oxide via silicic acid, and in this process, a small amount of alkali metal may remain in the produced silicon oxide. Accordingly, regulating the amount of the remaining alkali metal enables silicon oxide containing a predetermined amount of alkali metal atoms to be obtained.

The thickness of the intermediate layer is not limited, and is in the range of, for example, 1 to 50 nm, preferably 1 to 30 nm, more preferably 2 to 15 nm, and even more preferably 3 to 10 nm.

So far, the compound, the composition, and the article of the present disclosure have been described in detail. The compound, the composition, the article, and the like of the present disclosure are not limited to those exemplified above.

### Examples

Hereinafter, the present disclosure will now be described by way of Examples, but the present disclosure is not limited to the following Examples.

### (Synthetic Example 1)

First, 3.02 g of 22-tricosenoic acid, 26 mL of toluene, and 17 mL of methanol were added, then 20 mL of trimethylsilyldiazomethane was added dropwise, and the mixture was then stirred at room temperature for 3 hours. Thereafter, the mixture was concentrated under reduced pressure to give 3.11 g of compound (1).
¹H NMR (CDCl₃, 400 MHz) δ [ppm]: 1.249-1.649 (m), 2.005-2.061 (m), 2.279-2.316 (t), 1.567-1.622 (m), 3.662 (s), 4.904-5.015 (m), 5.760-5.862 (m)

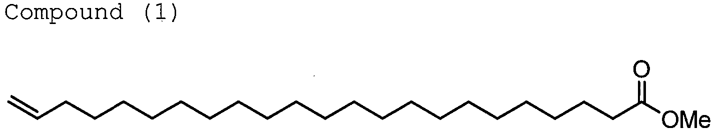

### (Synthetic Example 2)

First, 0.897 g of compound (1) obtained in Synthetic Example 1, 5.0 mL of toluene, and 0.158 g of a xylene solution containing a 2% Pt complex of 1,3-divinyl-1,1,3,3-tetramethyldisiloxane were added, the mixture was then cooled in an ice bath, and 0.7 mL of 1,1,1,3,3-pentamethyldisiloxane was added dropwise. After being stirred at 60°C for 7 hours, the mixture was purified to give 1.17 g of the following compound (2).
¹H NMR (CDCl₃, 400 MHz) δ [ppm]: 0.028-0.120 (m), 0.483-0.522 (t), 1.229-1.258 (m), 1.256-1.285 (m), 1.601-1.638 (m), 2.267-2.322 (t), 3.667 (s)

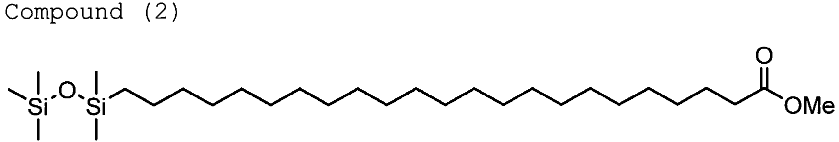

### (Synthetic Example 3)

First, 1.10 g of compound (2) obtained in Synthetic Example 2, 1.0 mL of toluene, 1.83 g of 4-[2,2-di(2-propylenyl)]pentenylamine, and 0.568 g of 1,5,7-triazabicyclo[4.4.0]dec-5-ene were added, and the mixture was then stirred at 125°C for 24 hours. Thereafter, the mixture was washed with an aqueous hydrochloric acid solution, dehydrated over magnesium sulfate, and concentrated under reduced pressure to give 1.18 g of compound (3).
¹H NMR (CDCl₃, 400 MHz) δ [ppm]: 0.010-0.088 (m), 0.491-0.509 (m), 1.249-1.287 (m), 1.570-1.642 (m), 2.021-2.041 (d), 2.139-2.177 (t), 3.186-3.202(d), 5.070-5.116(m), 5.535 (s), 5.812-5.917 (m)

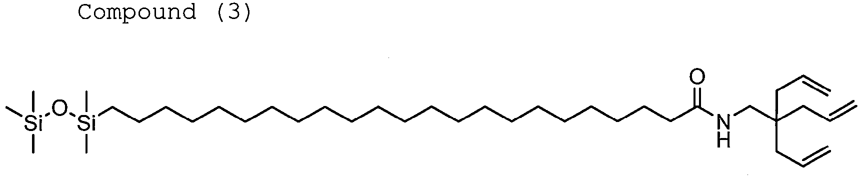

### (Synthetic Example 4)

First, 1.18 g of compound (3) obtained in Synthetic Example 3, 18.2 mL of toluene, 0.1 mL of pyridine, and 0.6 mL of a xylene solution containing a 2% Pt complex of 1,3-divinyl-1,1,3,3-tetramethyldisiloxane were added, then 1.8 mL of trimethoxysilane was added, and the mixture was stirred at room temperature overnight. Thereafter, the mixture was purified to give 1.63 g of the following compound having terminal trimethoxysilyl groups (4).
¹H NMR (CDCl₃, 400 MHz) δ [ppm]: 0.033-0.137 (m), 0.465-0.613 (m), 1.150-1.423 (m), 1.598-1.633 (m), 2.131-2.169 (t), 3.535-3.618 (m)

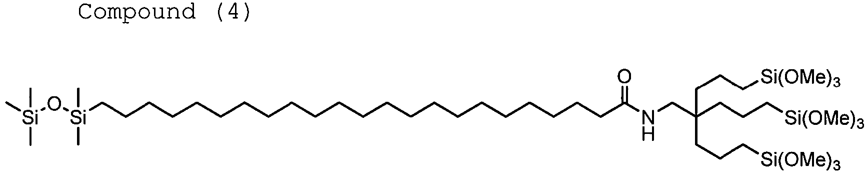

### (Surface-treating agent 1)

Compound 4 obtained above was diluted so as to be a 20 wt% ethanol solution, and thus a surface-treating agent 1 was obtained.

### (Synthetic Example 5)

First, 0.86 g of compound (2) obtained in Synthetic Example 2, 1.0 mL of toluene, 0.60 g of allylamine, and 0.252 g of 1,5,7-triazabicyclo[4.4.0]dec-5-ene were added, and the mixture was then stirred at 75°C for 6 hours. Thereafter, the mixture was washed with an aqueous hydrochloric acid solution, dehydrated over magnesium sulfate, and concentrated under reduced pressure to give 0.791 g of compound (5).
¹H NMR (CDCl₃, 400 MHz) δ [ppm]: 0.011-0.123 (m), 0.478-0.517 (m), 1.203-1.368 (m), 1.598-1.671 (m), 2.168-2.206 (t), 3.872-3.901 (t), 5.115-5.205(m), 5.479(s), 5.792-5.889 (m)

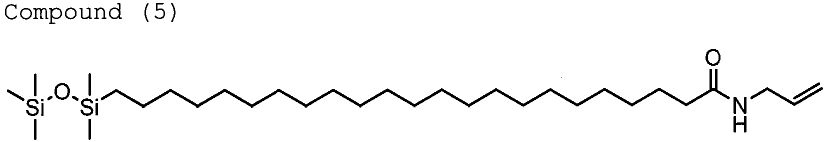

### (Synthetic Example 6)

First, 0.79 g of compound (5) obtained in Synthetic Example 5, 15.0 mL of toluene, 0.05 mL of pyridine, and 0.6 mL of a xylene solution containing a 2% Pt complex of 1,3-divinyl-1,1,3,3-tetramethyldisiloxane were added, then 1.0 mL of trimethoxysilane was added, and the mixture was stirred at room temperature overnight. Thereafter, the mixture was purified to give 0.912 g of the following compound having a terminal trimethoxysilyl group (6).
¹H NMR (CDCl₃, 400 MHz) δ [ppm]: 0.005-0.202 (m), 0.472-0.591 (m), 0.623-0.664 (m), 1.245-1.282 (m), 1.576-1.669 (m), 2.119-2.158 (t), 3.216-3.265 (m), 3.534-3.614 (m)

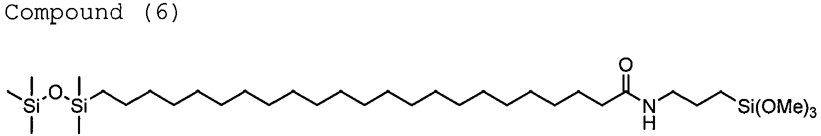

### (Surface-treating agent 2)

The compound 6 obtained above was used as a surface-treating agent 2 without being diluted with a solvent.

### (Synthetic Example 7)

First, 0.41 g of compound (1) obtained in Synthetic Example 1, 1.0 g of toluene, 0.1 mL of pyridine, and 0.1 mL of a xylene solution containing a 2% Pt complex of 1,3-divinyl-1,1,3,3-tetramethyldisiloxane were added, then 8.95 g of CH₃CH₂CH₂CH₂(Si(CH₃)₂O)ₙSi(CH₃)₂H was added, and the mixture was stirred at room temperature overnight. Thereafter, the mixture was purified to give 8.36 g of the following polydimethylsiloxane group-containing compound (7).
¹H NMR (CDCl₃, 400 MHz) δ [ppm]: -0.085-0.299 (m), 0.509-0.558 (m), 0.866-0.901 (t), 1.256-1.329 (m), 1.601-1.638 (m), 2.283-2.321 (t), 3.666 (s) 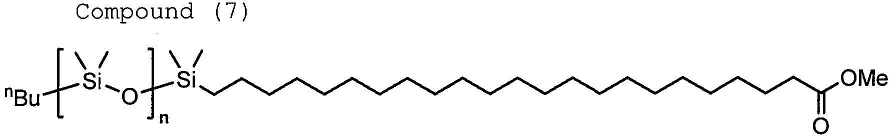 (n ≈ 60)

### (Synthetic Example 8)

First, 3.01 g of the polydimethylsiloxane group-containing compound (7) obtained in Synthetic Example 7, 3.16 g of toluene, 0.247 g of allylamine, and 0.0452 g of 1,5,7-triazabicyclo[4.4.0]dec-5-ene were added, and the mixture was then stirred at 75°C for 20 hours. Thereafter, the mixture was washed with an aqueous hydrochloric acid solution, dehydrated over magnesium sulfate, and concentrated under reduced pressure to give 2.181 g of compound (8).
¹H NMR (CDCl₃, 400 MHz) δ [ppm]: -0.090-0.295 (m), 0.504-0.553 (m), 0.862-0.898 (t), 1.208-1.324 (m), 1.589-1.673 (m), 2.169-2.208 (t), 3.876-3.904 (m), 5.117-5.214 (m), 5.451 (s), 5.755-5.896 (m)

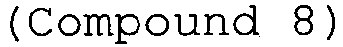

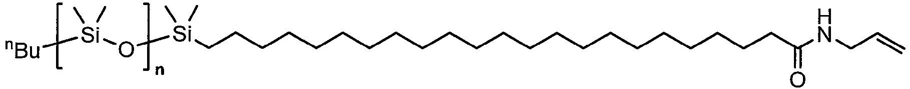

### (Synthetic Example 9)

First, 2.00 g of compound (8) obtained in Synthetic Example 8, 2.00 g of toluene, 0.1 mL of pyridine, and 0.2 mL of a xylene solution containing a 2% Pt complex of 1,3-divinyl-1,1,3,3-tetramethyldisiloxane were added, then 1.5 mL of trimethoxysilane was added, and the mixture was stirred at room temperature overnight. Thereafter, the mixture was purified to give 2.09 g of the following compound having a terminal trimethoxysilyl group (9).
¹H NMR (CDCl₃, 400 MHz) δ [ppm]: -0.006-0.295 (m), 0.504-0.556 (m), 0.630-0.670 (m), 0.862-0.896 (m), 1.250-1.347 (m), 1.590-1.672 (m), 2.108-2.164 (t), 3.213-3.281 (m), 3.542-3.621 (m)

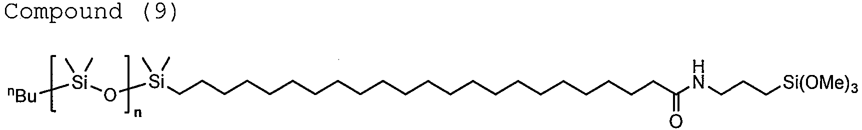

### (Surface-treating agent 3)

Compound 9 obtained above was diluted so as to be a 20 wt% hexamethyldisiloxane solution, and thus a surface-treating agent 3 was obtained.

### (Synthetic Example 10)

First, 5.02 g of methyl 10-undecenoate, 7.5 mL of toluene, 0.3 mL of a xylene solution containing a 2% Pt complex of 1,3-divinyl-1,1,3,3-tetramethyldisiloxane, and 0.1 mL of pyridine were added, the mixture was then cooled to 5°C or lower in an ice bath, 20 mL of 1,1,1,3,3-pentamethyldisiloxane was added, and the mixture was stirred at 60°C for 3 hours. Thereafter, the mixture was purified to give 8.62 g of compound (10).
¹H NMR (CDCl₃, 400 MHz) δ [ppm] : 0.017-0.077 (m), 0.465-0.504 (t), 1.250-1.268 (m), 1.567-1.622 (m), 2.264-2.301 (t), 3.643 (s)

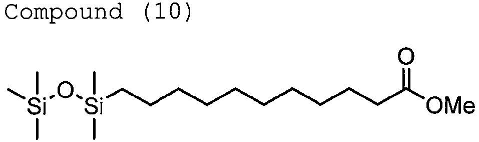

### (Synthetic Example 11)

First, 3.01 g of compound (10) obtained in Synthetic Example 10, 8.7 mL of toluene, 0.140 g of 1,5,7-triazabicyclo[4.4.0]dec-5-ene, and 5.52 g of allylamine were added, and the mixture was then stirred at 75°C for 24 hours. Thereafter, the mixture was diluted with toluene and washed with an aqueous hydrochloric acid solution. Subsequently, the mixture was dehydrated over magnesium sulfate and concentrated under reduced pressure to give 2.74 g of compound (12).
¹H NMR (CDCl₃, 400 MHz) δ [ppm]: -0.004-0.036 (m), 0.448-0.487 (m), 1.229-1.258 (m), 1.562-1.636 (m), 2.154-2.193 (t), 3.815-3.847 (m), 5.053-5.162 (m), 5.745-5.841 (m), 6.237 (s)

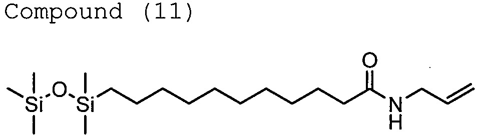

### (Synthetic Example 12)

First, 2.07 g of compound (11) obtained in Synthetic Example 11, 2.0 g of toluene, 0.1 mL of pyridine, and 0.2 mL of a xylene solution containing a 2% Pt complex of 1,3-divinyl-1,1,3,3-tetramethyldisiloxane were added, then 6.2 mL of trimethoxysilane was added, and the mixture was stirred at room temperature overnight. Thereafter, the mixture was purified to give 2.53 g of the following compound having a terminal trimethoxysilyl group (12).
¹H NMR (CDCl₃, 400 MHz) δ [ppm]: -0.136-0.046 (m), 0.464-0.503 (t), 0.618-0.658 (m), 1.247-1.272 (m), 1.571-1.663 (m), 1.796 (s), 2.117-2.155(t), 3.209-3.258(m), 3.562 (s)

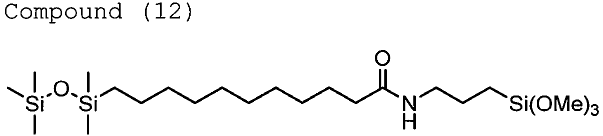

### (Surface-treating agent 4)

Compound 12 obtained above was diluted so as to be a 20 wt% hexamethyldisiloxane solution, and thus a surface-treating agent 4 was obtained.

### (Synthetic Example 14)

First, 0.50 g of compound (1) obtained in Synthetic Example 1, 10.0 mL of toluene, 0.05 mL of pyridine, and 0.3 mL of a xylene solution containing a 2% Pt complex of 1,3-divinyl-1,1,3,3-tetramethyldisiloxane were added, and then 1.2 mL of 1,1,1,3,5,5,5-heptamethyltrisiloxane was added dropwise. After being stirred at room temperature for 17 hours, the mixture was purified to give 0.87 g of the following compound (14).
¹H NMR (CDCl₃, 400 MHz) δ [ppm]: 0.033-0.241 (m), 0.438-0.550 (m), 1.191-1.413 (m), 1.607-1.642 (m), 2.242-2.325 (m), 3.669 (s)

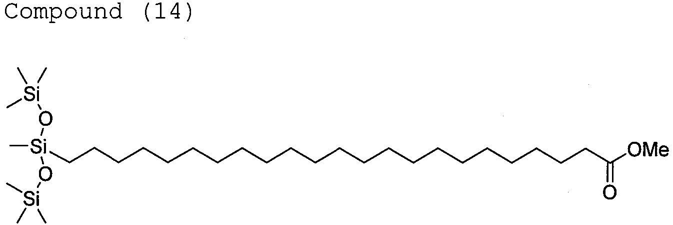

### (Synthetic Example 15)

First, 0.86 g of compound (14) obtained in Synthetic Example 14, 5.0 mL of allylamine, and 0.20 g of 1,5,7-triazabicyclo[4.4.0]dec-5-ene were added, and the mixture was then stirred at 75°C for 3 hours. Thereafter, the mixture was washed with an aqueous hydrochloric acid solution, dehydrated over magnesium sulfate, and concentrated under reduced pressure to give 0.72 g of compound (15).
¹H NMR (CDCl₃, 400 MHz) δ [ppm]: 0.076-0.128 (m), 0.413-0.465 (t), 1.183-1.1.404 (m), 1.604-1.677 (m), 2.173-2.248 (t), 3.841-3.942(m), 5.122-5.210(m), 5.809-5.877 (m)

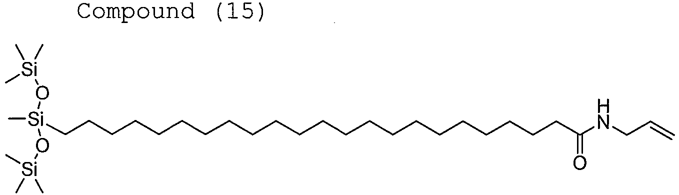

### (Synthetic Example 16)

First, 0.72 g of compound (15) obtained in Synthetic Example 15, 6.0 mL of toluene, 0.04 mL of pyridine, and 0.26 mL of a xylene solution containing a 2% Pt complex of 1,3-divinyl-1,1,3,3-tetramethyldisiloxane were added, then 1.4 mL of trimethoxysilane was added, and the mixture was stirred at room temperature overnight. Thereafter, the mixture was purified to give 0.48 g of the following compound having a terminal trimethoxysilyl group (16).
¹H NMR (CDCl₃, 400 MHz) δ [ppm]: 0.054-0.149 (m), 0.425-0.464 (t), 0.628-0.681 (m), 1.181-1.402 (m), 1.544-1.768(m), 2.125-2.164 (t), 3.558-3.646 (m)

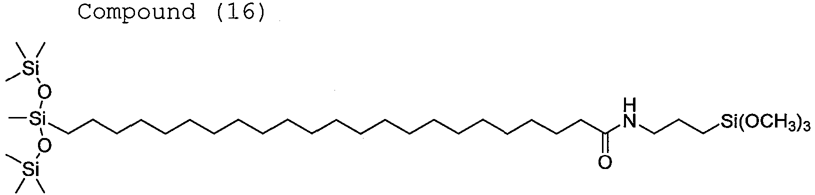

### (Surface-treating agent 5)

Compound 16 obtained above was diluted so as to be a 20 wt% ethanol solution, and thus a surface-treating agent 4 was obtained.

### (Synthetic Example 17)

First, 0.93 g of compound (1) obtained in Synthetic Example 1, 15.0 mL of toluene, 0.09 mL of pyridine, and 0.6 mL of a xylene solution containing a 2% Pt complex of 1,3-divinyl-1,1,3,3-tetramethyldisiloxane were added, and then 1.1 g of heptamethylcyclotetrasiloxane was added dropwise. After being stirred at room temperature for 6 hours, the mixture was purified to give 2.1 g of the following compound (17).
¹H NMR (CDCl₃, 400 MHz) δ [ppm]: 0.029-0.219 (m), 0.507-0.546 (t), 1.221-1.407 (m), 1.569-1.640 (m), 2.269-2.322 (m), 3.669 (s)

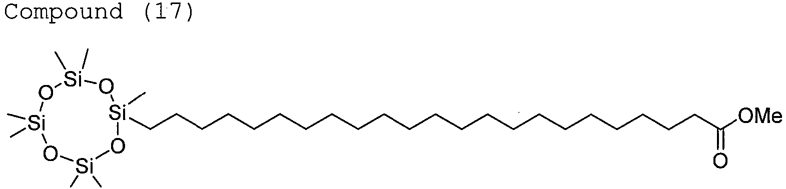

### (Synthetic Example 18)

First, 1.10 g of compound (17) obtained in Synthetic Example 17, 9.0 mL of allylamine, and 0.39 g of 1,5,7-triazabicyclo[4.4.0]dec-5-ene were added, and the mixture was then stirred at 75°C for 6 hours. Thereafter, the mixture was washed with an aqueous hydrochloric acid solution, dehydrated over magnesium sulfate, and concentrated under reduced pressure to give 2.43 g of compound (18).
¹H NMR (CDCl₃, 400 MHz) δ [ppm]: 0.025-0.172 (m), 0.447-0.570 (m), 1.108-1.435 (m), 1.604-1.677 (quin), 2.175-2.214 (t), 3.879-3.904(m), 5.121-5.206(m), 5.796-5.893 (m)

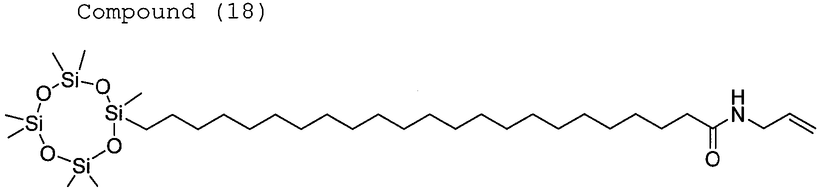

### (Synthetic Example 19)

First, 2.40 g of compound (18) obtained in Synthetic Example 18, 20 mL of toluene, 0.1 mL of pyridine, and 0.8 mL of a xylene solution containing a 2% Pt complex of 1,3-divinyl-1,1,3,3-tetramethyldisiloxane were added, then 4.0 mL of trimethoxysilane was added, and the mixture was stirred at room temperature overnight. Thereafter, the mixture was purified to give 2.4 g of the following compound having a terminal trimethoxysilyl group (19).
¹H NMR (CDCl₃, 400 MHz) δ [ppm]: 0.024-0.169 (m), 0.504-0.569 (m), 0.631-0.672 (t), 1.183-1.403 (m), 1.586-1.676 (quin), 2.127-2.166 (t), 3.192-3.273 (quin), 3.492-3.612 (m)

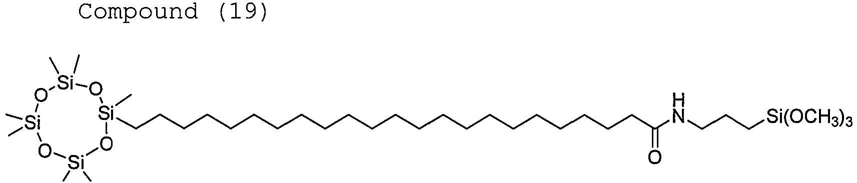

### (Surface-treating agent 6)

Compound 19 obtained above was diluted so as to be a 20 wt% ethanol solution, and thus a surface-treating agent 6 was obtained.

### (Synthetic Example 20)

First, 1.0 g of compound (1) obtained in Synthetic Example 1, 5.5 mL of toluene, 0.9 mL of chlorodimethylsilane, and 0.14 mL of a xylene solution containing a 2% Pt complex of 1,3-divinyl-1,1,3,3-tetramethyldisiloxane were added, and the mixture was then stirred at 40°C for 4 hours. Thereafter, the mixture was purified to give 1.12 g of a compound having a chlorodimethylsilyl group at a terminal (101). Subsequently, in a different flask, 3 g of palladium/carbon (Pd 10%) (an approximately 55% product wet with water), 44 mL of tetrahydrofuran, 9 mL of water, and 10 mL of 1,1,1,3,5,5,5-heptamethyltrisiloxane were added, and the mixture was stirred at 70°C for 2 hours. Thereafter, the mixture was purified to give 2.2 g of a compound having terminal silanol groups (102). Compound (101) and compound (102) were dissolved in toluene and stirred at room temperature overnight, pyridine was added, and the mixture was further stirred for 1 hour. Thereafter, the mixture was subjected to purification by liquid separation and purification by silica gel column to give 0.401 g of compound (20).
¹H NMR (CDCl₃, 400 MHz) δ [ppm]: 0.359-0.477 (m), 0.790-0.830 (m), 1.251-1.439 (m), 1.578-1.632 (t), 2.277-2.315 (t), 3.659 (s)

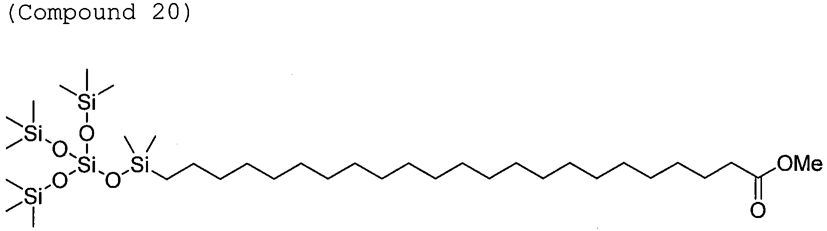

### (Synthetic Example 21)

First, 0.401 g of compound (20) obtained in Synthetic Example 20, 0.085 g of 1,5,7-triazabicyclo[4.4.0]dec-5-ene, and 1.55 g of allylamine were added, and the mixture was then stirred at 75°C for 4 hours. Thereafter, the mixture was diluted with diethyl ether and washed with an aqueous hydrochloric acid solution. Subsequently, the mixture was dehydrated over magnesium sulfate and concentrated under reduced pressure to give 0.374 g of compound (21).
¹H NMR (CDCl₃, 400 MHz) δ [ppm]: 0.057-0.269 (m), 0.512-0.552 (m), 1.150-1.431 (m), 1.599-1.672 (m), 2.173-2.211 (m), 3.889 (s), 5.115-5.125(m), 5.482(bs), 5.792-5.889 (m)

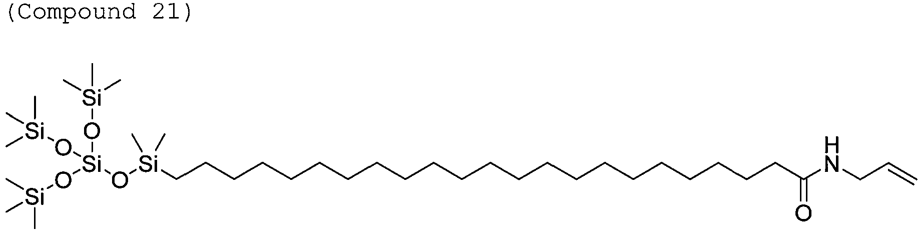

### (Compound 22)

First, 0.374 g of compound (21) obtained in Synthetic Example 21, 3.6 mL of toluene, 13.5 µL of aniline, and 28 µL of a xylene solution containing a 2% Pt complex of 1,3-divinyl-1,1,3,3-tetramethyldisiloxane were added, then 0.13 mL of trimethoxysilane was added, and the mixture was stirred at 45°C for 4 hours. Thereafter, the mixture was purified to give 0.384 g of the following compound having a terminal trimethoxysilyl group (22).
¹H NMR (CDCl₃, 400 MHz) δ [ppm]: 0.010-0.209 (m), 0.450-0.560 (m), 0.628-0.668 (m), 1.180-1.367 (m), 1.581-1.674 (m), 2.123-2.162(t), 3.220-3.269(q), 3.561-3.618(m), 5.636 (bs)

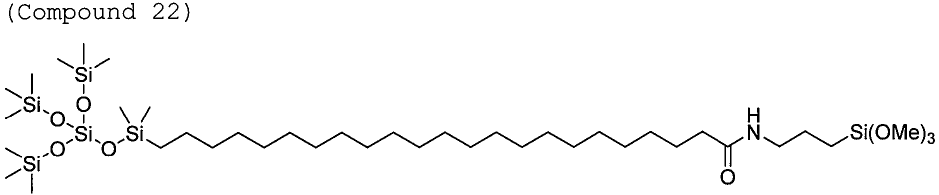

### (Surface-treating agent 7)

Compound 22 obtained above was diluted so as to be a 20 wt% ethanol solution, and thus a surface-treating agent 7 was obtained.

### (Compound 23)

A flask was charged with tris(trimethylsilyloxy)silane (0.7 g), 18-octadecen-1-ol (1.0 g), tris(pentafluorophenyl)borane (0.24 g), and toluene (10 mL), and the solution was heated in an oil bath (set at 70°C) for 2 hours while being stirred with a magnetic stirrer. Thereafter, the reaction solution was subjected to filtration through a silica gel column, and
the filtrate was concentrated to give 1.2 g of a terminal olefin compound (23) as a colorless oil.
1H-NMR (400 MHz, chloroform-D) δ 5.87-5.76 (m, 1H), 5.02-4.91 (m, 2H), 3.64 (t, J = 6.6 Hz, 2H), 2.07-2.01 (m, 2H), 1.55-1.50 (m, 2H), 1.41-1.26 (m, 26H), 0.15-0.07 (m, 18H), 0.03 (s, 3H)

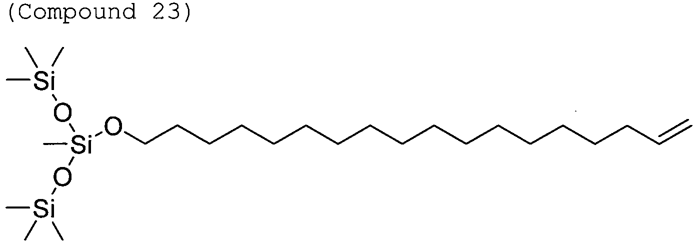

### (Synthetic Example 24)

A flask was charged with the terminal olefin compound (23) (1.0 g), Karstedt's catalyst (0.13 g, a xylene solution containing 2% platinum), trimethoxysilane (0.75 g), pyridine (22 mg), and toluene (10 mL) and the mixture was stirred at room temperature for 4 hours and then concentrated under reduced pressure to give 1.09 g of compound (24) as a slightly yellow oil.
1H-NMR (400 MHz, chloroform-D) δ 3.74-3.53 (m, 11H), 1.56-1.50 (m, 2H), 1.43-1.25 (m, 30H), 0.67-0.62 (m, 2H), 0.26-0.07 (m, 18H), 0.04 (q, J = 4.4 Hz, 3H)

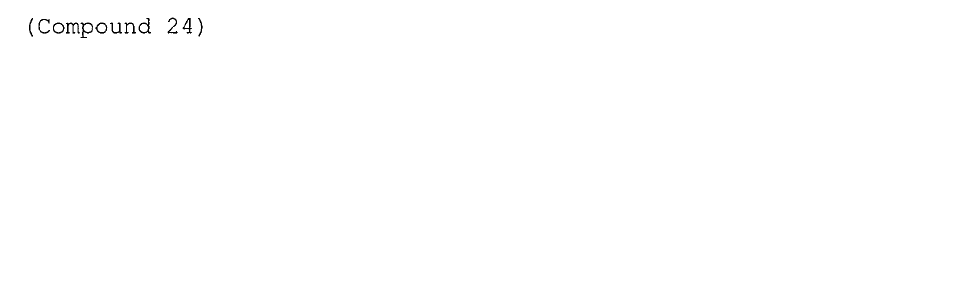

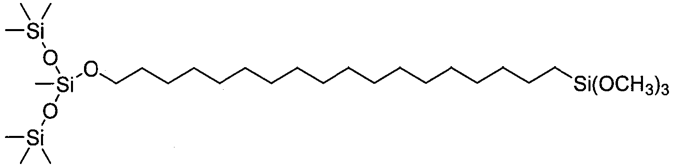

### (Surface-treating agent 8)

Compound 24 obtained above was diluted so as to be a 20 wt% ethanol solution, and thus a surface-treating agent 8 was obtained.

### (Synthetic Example 25)

First, 1.8 g of compound (14) obtained in Synthetic Example 14, 2.01 mL of 2-allylpent-4-en-1-amine, and 0.43 g of 1,5,7-triazabicyclo[4.4.0]dec-5-ene were added, and the mixture was then stirred at 75°C for 3 hours. Thereafter, the mixture was washed with an aqueous hydrochloric acid solution, dehydrated over magnesium sulfate, and concentrated under reduced pressure to give 1.92 g of compound (25).
¹H NMR (CDCl₃, 400 MHz) δ [ppm]: 0.076-0.128 (m), 0.413-0.465 (t), 1.183-1.1.404 (m), 1.604-1.677 (m),1.704-1.769 (m), 1.994-2.093 (m), 2.103-2.285 (m), 3.161-3.328(t), 4.997-5.195(m), 5.397-5.595 (s), 5.708-5.975 (m)

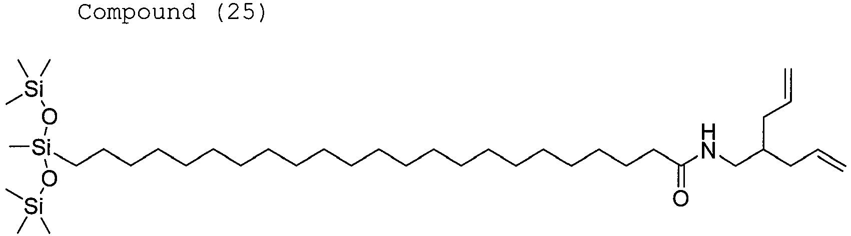

### (Synthetic Example 26)

First, 0.47 g of compound (25) obtained in Synthetic Example 25, 3.5 mL of toluene, 0.014 mL of pyridine, and 0.1 mL of a xylene solution containing a 2% Pt complex of 1,3-divinyl-1,1,3,3-tetramethyldisiloxane were added, then 0.52 mL of trimethoxysilane was added, and the mixture was stirred at room temperature for 3 hours. Thereafter, the mixture was purified to give 0.48 g of the following compound having terminal trimethoxysilyl groups (26).
¹H NMR (CDCl₃, 400 MHz) δ [ppm]: 0.054-0.149 (m), 0.425-0.464 (t), 0.628-0.681 (t), 1.181-1.402 (m), 1.544-1.768(m), 2.125-2.164 (t), 3.135-3.203 (t), 3.558-3.646 (m), 5.449-5.528 (s)

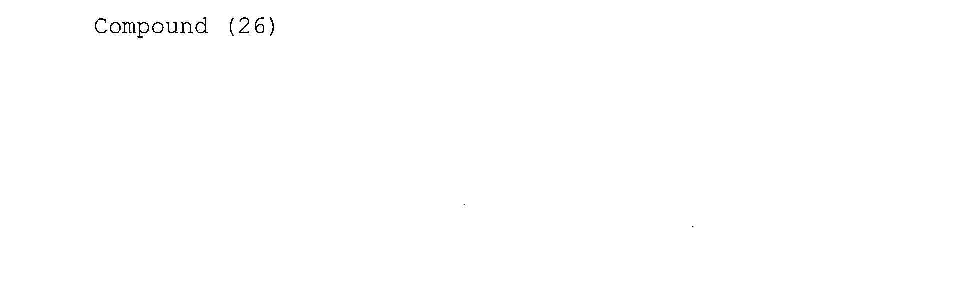

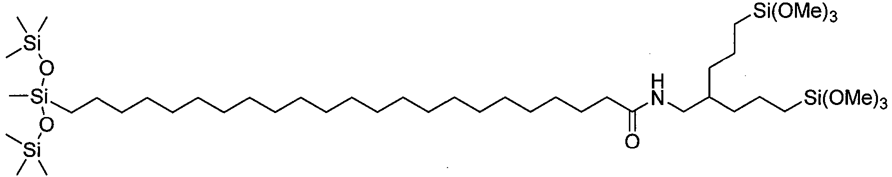

### (Surface-treating agent 9)

Compound 26 obtained above was diluted so as to be a 20 wt% ethanol solution, and thus a surface-treating agent 9 was obtained.

### (Synthetic Example 27)

A glass flask was charged with a stirrer tip, 2.0 g of 16-hydroxyhexadecanoic acid, 3.6 g of potassium carbonate, 1.5 g of methyl iodide, and 10 mL of dimethyl sulfoxide and immersed in an oil bath at 60°C, and the mixture was stirred with a magnetic stirrer for 18 hours. Thereafter, toluene and water were added to the flask, the mixture was stirred, the liquid in the flask was transferred to a separatory funnel and allowed to stand still for separation, and the lower layer (the aqueous layer) was removed. Toluene and water were similarly added, the organic layer was washed twice with water, dried over magnesium sulfate, and then concentrated under reduced pressure to give 1.9 g of methyl 16-hydroxyhexadecanoate as a colorless oil.
1H-NMR (400 MHz, chloroform-D) δ 3.66-3.62 (m, 5H), 2.36-2.28 (m, 2H), 1.65-1.53 (m, 4H), 1.33-1.25 (m, 22H)

### Methyl 16-hydroxyhexadecanoate

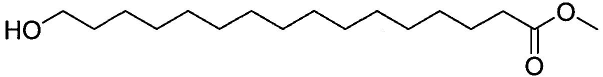

### (Synthetic Example 28)

A glass flask was charged with a stirrer tip, 0.93 g of methyl 16-hydroxyhexadecanoate obtained in Synthetic Example 27, 0.46 g of 1,5,7-triazabicyclo[4.4.0]dec-5-ene, and 2.5 mL of allylamine, and the mixture was stirred at room temperature for 2 hours with a magnetic stirrer. Thereafter, chloroform and an aqueous hydrochloric acid solution were added to the flask, the mixture was stirred, the liquid in the flask was transferred to a separatory funnel and allowed to stand still for separation, and the upper layer (the aqueous layer) was removed. Chloroform and an aqueous hydrochloric acid solution were similarly added, the organic layer was washed twice with water, dried over magnesium sulfate, and then concentrated under reduced pressure to give 0.88 g of N-allyl-16-hydroxyhexadecanamide as a white solid.
1H-NMR (400 MHz, chloroform-D) δ 5.89-5.79 (m, 1H), 5.49 (s, 1H), 5.20-5.12 (m, 2H), 3.89 (td, J = 5.7, 1.4 Hz, 2H), 3.64 (dd, J = 12.1, 5.3 Hz, 2H), 2.21-2.17 (m, 2H), 1.65-1.53 (m, 4H), 1.40-1.25 (m, 22H)

### N-Allyl-16-hydroxyhexadecanamide

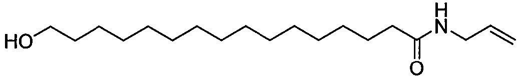

### (Synthetic Example 29)

A glass flask was charged with a stirrer tip, 0.77 g of N-allyl-16-hydroxyhexadecanamide obtained in Synthetic Example 28, 0.5 g of 1,1,1,3,5,5,5-heptamethyltrisiloxane, 0.11 g of tris(pentafluorophenyl)borane, and 14 mL of toluene, and immersed in an oil bath at 70°C, and the mixture was stirred with a magnetic stirrer for 2 hours. Then, 5 g of silica gel was added to the flask, the mixture was stirred at room temperature and then subjected to filtration, the filtrate was concentrated under reduced pressure to give 0.86 g of compound (29) as a white solid.
1H-NMR (400 MHz, chloroform-D) δ 5.89-5.79 (m, 1H), 5.45 (s, 1H), 5.21-5.12 (m, 2H), 3.89 (tt, J = 5.7, 1.4 Hz, 2H), 3.65 (q, J = 6.9 Hz, 2H), 2.18 (q, J = 7.3 Hz, 2H), 1.67-1.50 (m, 4H), 1.29-1.25 (m, 22H), 0.16-0.09 (m, 18H), 0.03 (s, 3H)

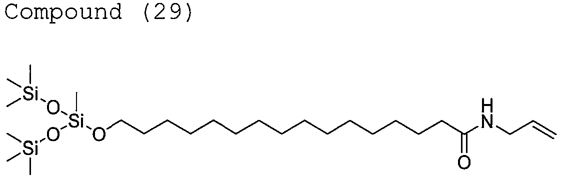

### (Synthetic Example 30)

A glass flask was charged with a stirrer tip, 0.86 g of compound (29) obtained in Synthetic Example 29, 0.1 mL of a xylene solution containing a 2% Pt complex of 1,3-divinyl-1,1,3,3-tetramethyldisiloxane, 14 µL of pyridine, 0.50 mL of trimethoxysilane, and 10 mL of toluene, and the mixture was stirred at room temperature for 4 hours with a magnetic stirrer. Thereafter, the mixture was concentrated under reduced pressure to give 0.94 g of compound (30) as a light yellow oil.
1H-NMR (400 MHz, chloroform-D) δ 5.62 (s, 1H), 3.65-3.54 (m, 11H), 3.25 (q, J = 6.7 Hz, 2H), 2.20-2.12 (m, 2H), 1.68-1.50 (m, 6H), 1.27 (d, J = 12.8 Hz, 22H), 0.67-0.63 (m, 2H), 0.15-0.07 (m, 18H), 0.01 (s, 3H)

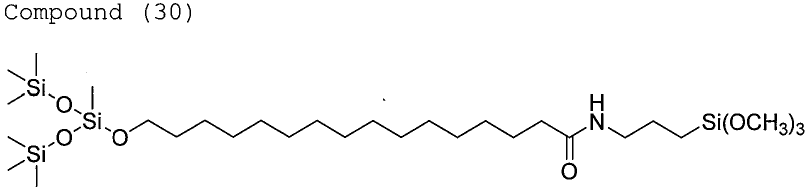

### (Surface-treating agent 10)

Compound (30) obtained above was diluted so as to be a 20 wt% ethanol solution, and thus a surface-treating agent 10 was obtained.

### (Synthetic Example 31)

First, 7.01 g of methyl 12-aminolaurate H₂N(CH₂)₁₁COOCH₃, 40.0 ml of dichloromethane, 0.73 g of 4-dimethylaminopyridine, and 8.77 g of 1-(3-dimethylaminopropyl)-3-ethylcarbodiimide hydrochloride were added, 6.20 g of 10-undecenoic acid was added in an ice bath, and the mixture was stirred at room temperature overnight. Thereafter, the mixture was purified to give 11.34 g of the following amide group-containing methyl ester compound (31) CH₂=CH(CH₂)₃CONH(CH₂)₁₁COOCH₃.
¹H NMR (CDCl₃, 400 MHz) δ [ppm]: 1.251-1.375 (m), 1.456-1.490 (m), 1.573-1.644 (m), 1.998-2.061 (m), 2.121-2.158 (t), 2.275-2.313 (t), 3.201-3.251 (m), 3.658 (s), 4.903-5.007 (m), 5.397 (br s), 5.747-5.849 (m)

### Amide group-containing methyl ester compound (31)

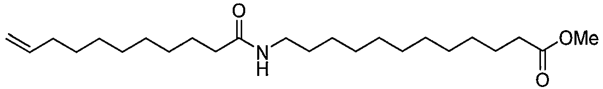

### (Synthetic Example 32)

First, 4.00 g of the amide group-containing methyl ester compound (31) CH₂=CH(CH₂)₈CONH(CH₂)₁₁COOCH₃ obtained in Synthetic Example 31, 46.0 ml of toluene, 0.33 ml of pyridine, 0.52 ml of a xylene solution containing a 2% Pt complex of 1,3-divinyl-1,1,3,3-tetramethyldisiloxane, and 6.86 ml of 1,1,1,3,5,5,5-heptamethyltrisiloxane were added, and the mixture was stirred at 60°C for 8 hours. Thereafter, the mixture was purified to give 5.09 g of the following terminal siloxane compound (32) ((CH₃)₃SiO)₂SiCH₃(CH₂)₁₀CONH(CH₂)₁₁COOCH₃.
¹H NMR (CDCl₃, 400 MHz) δ [ppm]: 0.014-0.013 (m), 0.415-0.453 (t), 1.250-1.271 (m), 1.998-2.061 (m), 2.121-2.158 (t), 2.275-2.313 (t), 3.201-3.251 (m), 3.658 (s), 4.903-5.007 (m), 5.397 (br s), 5.747-5.849 (m)

### Terminal siloxane compound (32)

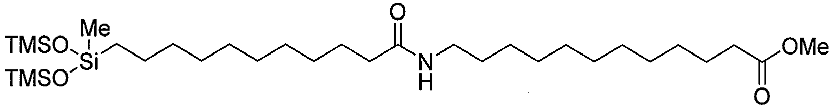

### (Synthetic Example 33)

First, 1.27 g of the terminal siloxane compound (32) ((CH₃)₃SiO)₂SiCH₃(CH₂)₁₀CONH(CH₂)₁₁COOCH₃ obtained in Synthetic Example 32, 0.34 g of 1,5,7-triazabicyclo[4.4.0]dec-5-ene, and 3.52 g of allylamine were added, and the mixture was heated to 65°C and stirred for 6 hours. Thereafter, the mixture was purified to give 1.05 g of the terminal siloxane compound (33) ((CH₃)₃SiO)₂SiCH₃(CH₂)₁₀CONH(CH₂)₁₁CONHCH₂CH=CH₂.
¹H NMR (CDCl₃, 400 MHz) δ [ppm]: 0.072-0.104 (m), 0.418-0.457 (t), 1.255-1.287 (m), 1.459-1.494 (m), 1.597-1.631 (m), 2.124-2.206 (m), 3.204-3.254 (m), 3.871-3.903 (m), 5.112-5.199 (m), 5.791-5.887 (m)

### Terminal siloxane compound (33)

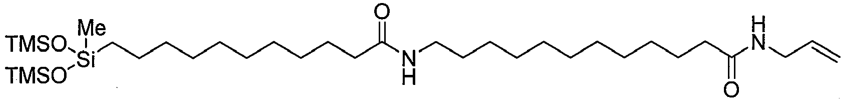

### (Synthetic Example 34)

First, 1.00 g of the terminal siloxane compound (33) ((CH₃)₃SiO)₂SiCH₃(CH₂)₁₀CONH(CH₂)₁₁CONHCH₂CH=CH₂ obtained in Synthetic Example 33, 10.0 g of toluene, 0.01 g of triacetoxymethylsilane, and 0.08 ml of a xylene solution containing a 2% Pt complex of 1,3-divinyl-1,1,3,3-tetramethyldisiloxane were added, then 0.40 mL of trichlorosilane was added, and the mixture was heated to 60°C and stirred for 3 hours. Thereafter, volatiles were distilled off under reduced pressure, then a mixed solution of 0.15 g of methanol and 3.40 ml of trimethyl orthoformate was added, and the mixture was then heated to 65°C and stirred for 2 hours. Thereafter, the mixture was purified to give 0.60 g of the following terminal trimethoxysilyl group-containing compound (34) ((CH₃)₃SiO)₂SiCH₃(CH₂)₁₀CONH(CH₂)₁₁CONH(CH₂)₃Si(OCH₃)₃.
¹H NMR (CDCl₃, 400 MHz) δ [ppm]: 0.081-0.154 (m), 0.521-0.668 (m), 1.253 (br s), 1.463-1.495 (m), 1.581-1.698 (m), 2.124-2.163 (t), 3.204-3.251 (m), 3.570 (s)

### Terminal trimethoxysilyl group-containing compound (34)

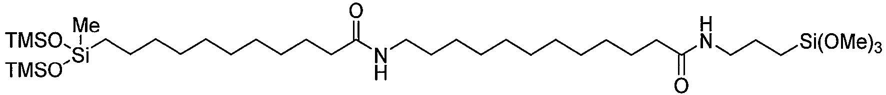

### (Synthetic Example 35)

First, 1.00 g of 16-heptadecenoic acid, 11.2 mL of toluene, and 7.50 mL of methanol were added, then 7.60 mL of trimethylsilyldiazomethane was added dropwise, and the mixture was stirred at room temperature for 1 hour. Thereafter, the mixture was concentrated under reduced pressure to give 1.15 g of compound (35).
¹H NMR (CDCl₃, 400 MHz) δ [ppm]: 1.252-1.371 (m),1.597-1.615 (m), 2.010-2.061 (m), 2.279-2.316 (t), 3.662 (s), 4.910-5.012 (dd), 5.777-5.846 (m)°

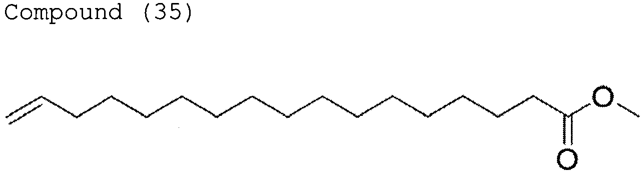

### (Synthetic Example 36)

First, 1.06 g of compound (35) obtained in Synthetic Example 35, 18.8 mL of toluene, 0.12 mL of pyridine, and 0.43 mL of a xylene solution containing a 2% Pt complex of 1,3-divinyl-1,1,3,3-tetramethyldisiloxane were added, then 3.06 mL of 1,1,1,3,5,5,5-heptamethyltrisiloxane was added dropwise, and the mixture was stirred at room temperature for 6 hours. Thereafter, the mixture was concentrated under reduced pressure to give 2.07 g of compound (36).
¹H NMR (CDCl₃, 400 MHz) δ [ppm]: -0.001-0.130 (m),0.434-0.472 (m), 1.176-1.288 (m), 1.582-1.640 (m), 2.269-2.323 (m), 3.670(s)

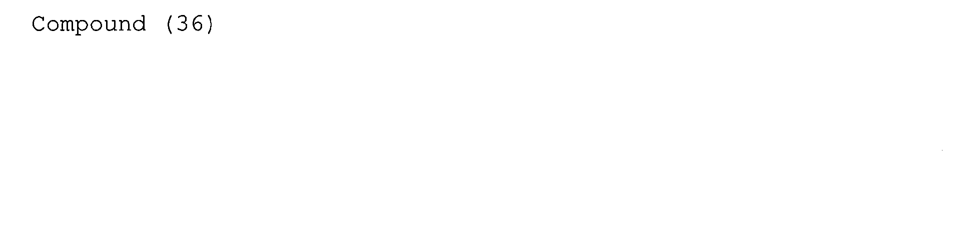

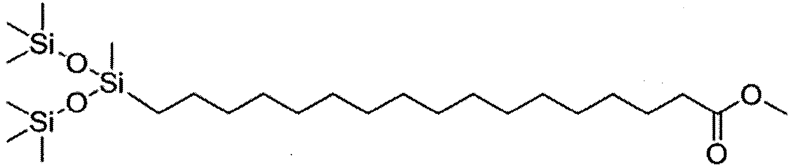

### (Synthetic Example 37)

First, 0.80 g of compound (36) obtained in Synthetic Example 36, 5.96 mL of allylamine, and 0.22 g of 1,5,7-triazabicyclo[4.4.0]dec-5-ene were added, and the mixture was then stirred at 75°C for 3 hours. Thereafter, the mixture was washed with an aqueous hydrochloric acid solution, dehydrated over magnesium sulfate, and concentrated under reduced pressure to give 0.62 g of compound (37).
¹H NMR (CDCl₃, 400 MHz) δ [ppm]: -0.012-0.123 (m),0.423-0.461 (m), 1.250-1.289 (m), 1.615-1.660 (m),2.166-2.204 (t), 3.122-2.228(m), 3.876-3.902 (m), 5.108-5.202 (m),5.778-5.886(m)°

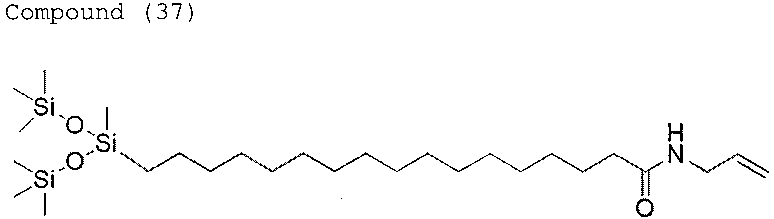

### (Synthetic Example 38)

First, 0.5 g of compound (37) obtained in Synthetic Example 37, 2.0 mL of toluene, 0.054 mL of a xylene solution containing a 2% Pt complex of 1,3-divinyl-1,1,3,3-tetramethyldisiloxane, and 0.026 mL of aniline were added, then 0.24 mL of trimethoxysilane was added, and the mixture was stirred at 45°C for 2 hours. Thereafter, the mixture was purified to give 0.46 g of the following compound having a terminal trimethoxysilyl group (38).
¹H NMR (CDCl₃, 400 MHz) δ [ppm]: -0.064-0.0.231 (m), 0.446 (t), 0.652 (t), 1.109-1.404 (m), 1.529-1.676 (m), 2.148 (t), 3.249 (q), 3.493-3.667 (m), 5.630 (br)

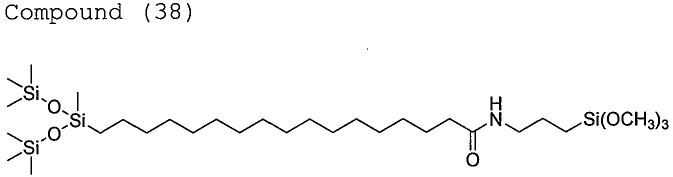

### (Surface-treating agent 11)

Compound (38) obtained above was diluted so as to be a 20 wt% ethanol solution, and thus a surface-treating agent 11 was obtained.

### (Synthetic Example 39)

First, 1.00 g of compound (36) obtained in the same manner as Synthetic Example 36, 2.41 mL of 2-allylpent-4-en-1-amine, and 0.28 g of 1,5,7-triazabicyclo[4.4.0]dec-5-ene were added, and the mixture was then stirred at 75°C for 3 hours. Thereafter, the mixture was washed with an aqueous hydrochloric acid solution, dehydrated over magnesium sulfate, and concentrated under reduced pressure to give 1.03 g of compound (39).
¹H NMR (CDCl₃, 400 MHz) δ [ppm]: -0.012-0.123 (m),0.423-0.561 (m), 1.178-1.279 (m), 1.610-1.629 (m),1.716-1.749 (m),2.042-2.352(m), 3.122-2.228(m), 3.663-3.744 (m), 5.031-5.157 (m),5.734-5.838(m)°

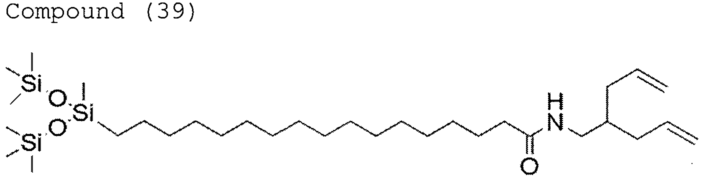

### (Synthetic Example 40)

First, 0.82 g of compound (39) obtained in Synthetic Example 39, 2.0 mL of toluene, 0.078 mL of a xylene solution containing a 2% Pt complex of 1,3-divinyl-1,1,3,3-tetramethyldisiloxane, and 0.038 mL of aniline were added, then 0.70 mL of trimethoxysilane was added, and the mixture was stirred at 45°C for 2 hours. Thereafter, the mixture was purified to give 1.08 g of the following compound having terminal trimethoxysilyl groups (40).
¹H NMR (CDCl₃, 400 MHz) δ [ppm]: -0.001-0.166 (m), 0.453 (t), 0.635 (t), 1.190-1.327 (m), 1.398-1.546 (m), 1.627(quin), 2.159(t), 3.189(t), 3.489-3.685 (m), 5.510(t)

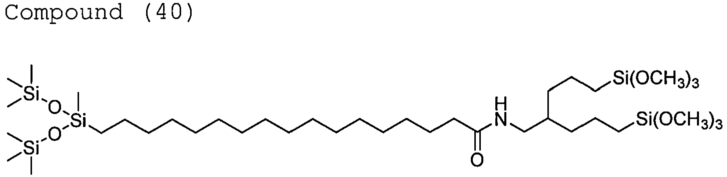

### (Surface-treating agent 12)

Compound (40) obtained above was diluted so as to be a 20 wt% ethanol solution, and thus a surface-treating agent 12 was obtained.

### (Synthetic Example 41)

First, 1.04 g of compound (1) obtained in the same manner as Synthetic Example 1, 15 mL of toluene, 0.08 mL of pyridine, and 0.6 mL of a xylene solution containing a 2% Pt complex of 1,3-divinyl-1,1,3,3-tetramethyldisiloxane were added, and then 3.68 mL of MCR-H07 manufactured by Gelest was added dropwise. After being stirred at room temperature for 2 days, the mixture was purified to give 4.15 g of the following compound (41). The average number n of repeating units is 10.
¹H NMR (CDCl₃, 400 MHz) δ [ppm]: 0.019-0.115 (m), 0.511 (t), 0.858(t), 1.200-1.325 (m), 1.592 (quin), 2.276-2.293 (m), 3.641(s)

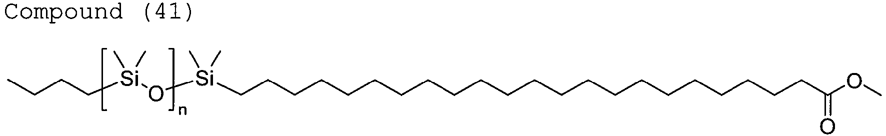

### (Synthetic Example 42)

First, 3.85 g of compound (41) obtained in Synthetic Example 41, 10 mL of allylamine, and 0.40 g of 1,5,7-triazabicyclo[4.4.0]dec-5-ene were added, and the mixture was then stirred at 75°C for 3 hours. Thereafter, the mixture was washed with an aqueous hydrochloric acid solution, dehydrated over magnesium sulfate, and concentrated under reduced pressure to give 3.09 g of compound (42). The average number n of repeating units is 10.
¹H NMR (CDCl₃, 400 MHz) δ [ppm]: 0.018-0.113 (m), 0.509 (t), 0.858 (t), 1.165-1.376 (m), 1.613 (quin), 2.162(t), 3.852-3.877(m), 5.093-5.175 (m), 5.412 (br), 5.7770-5.864(m)

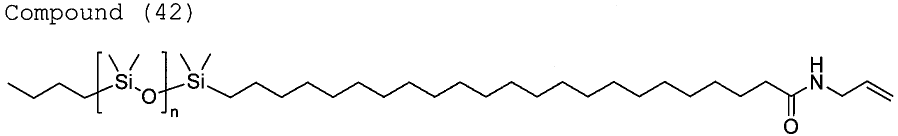

### (Synthetic Example 43)

First, 3.09 g of compound (42) obtained in Synthetic Example 42, 10 mL of toluene, 0.065 mL of pyridine, and 0.47 mL of a xylene solution containing a 2% Pt complex of 1,3-divinyl-1,1,3,3-tetramethyldisiloxane were added, then 2.4 mL of trimethoxysilane was added, and the mixture was stirred at room temperature overnight. Thereafter, the mixture was purified to give 2.96 g of the following compound having a terminal trimethoxysilyl group (43). The average number n of repeating units is 10.
¹H NMR (CDCl₃, 400 MHz) δ [ppm]: 0.019-0.086 (m), 0.482-0.541 (m), 0.625 (t), 0.858 (t), 1.259-1.325(m), 1.520-1.649 (m), 2.121 (t), 3.223(q), 3.519-3.590(m), 5.599(br)

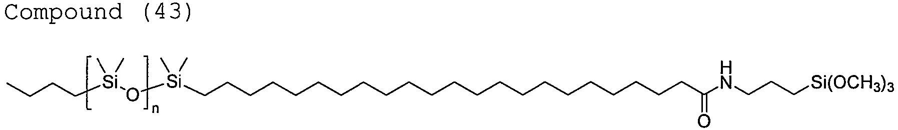

### (Surface-treating agent 13)

Compound (43) obtained above was diluted so as to be a 20 wt% ethanol solution, and thus a surface-treating agent 13 was obtained.

### (Synthetic Example 44)

First, 1.04 g of compound (1) obtained in the same manner as Synthetic Example 1, 15 mL of toluene, 0.08 mL of pyridine, and 0.6 mL of a xylene solution containing a 2% Pt complex of 1,3-divinyl-1,1,3,3-tetramethyldisiloxane were added, and then 4.0 g of MCR-H11 manufactured by Gelest was added dropwise. After being stirred at room temperature for 2 days, the mixture was purified to give 4.36 g of the following compound (44). The average number n of repeating units is 13.
¹H NMR (CDCl₃, 400 MHz) δ [ppm]: 0.019-0.115 (m), 0.490-0.530 (m), 0.858 (t), 1.200-1.378 (m), 1.592 (quin), 2.276-2.293 (m), 3.640 (s)

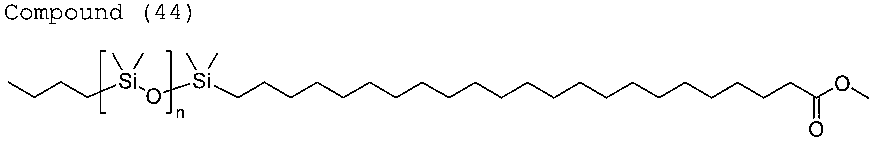

### (Synthetic Example 45)

First, 4.36 g of compound (44) obtained in Synthetic Example 44, 10 mL of allylamine, and 0.37 g of 1,5,7-triazabicyclo[4.4.0]dec-5-ene were added, and the mixture was then stirred at 75°C for 3 hours. Thereafter, the mixture was washed with an aqueous hydrochloric acid solution, dehydrated over magnesium sulfate, and concentrated under reduced pressure to give 3.55 g of compound (45). The average number n of repeating units is 13.
¹H NMR (CDCl₃, 400 MHz) δ [ppm]: 0.018-0.131 (m), 0.490-0.528 (t), 0.858 (t), 1.182-1.377 (m), 1.613 (quin), 2.162 (t), 3.852-3.880 (m), 5.093-5.175(m), 5.401 (br), 5.770-5.868 (m)

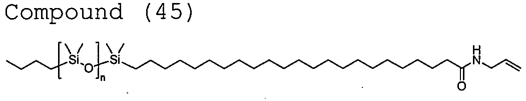

### (Synthetic Example 46)

First, 3.55 g of compound (45) obtained in Synthetic Example 45, 15 mL of toluene, 0.08 mL of pyridine, and 0.6 mL of a xylene solution containing a 2% Pt complex of 1,3-divinyl-1,1,3,3-tetramethyldisiloxane were added, then 3.0 mL of trimethoxysilane was added, and the mixture was stirred at room temperature overnight. Thereafter, the mixture was purified to give 3.43 g of the following compound having a terminal trimethoxysilyl group (46). The average number n of repeating units is 13.
¹H NMR (CDCl₃, 400 MHz) δ [ppm]: 0.019-0.100 (m), 0.491-0.531 (m), 0.626 (t), 0.859 (t), 1.184-1.327(m), 1.578-1.653 (m), 2.122 (t), 3.225 (q), 3.520-3.626 (m), 5.600 (br)

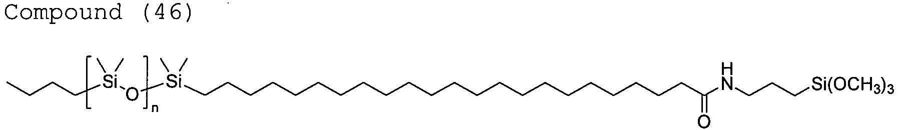

### (Surface-treating agent 14)

Compound (46) obtained above was diluted so as to be a 20 wt% ethanol solution, and thus a surface-treating agent 14 was obtained.

### (Synthetic Example 47)

First, 1.25 g of compound (1) obtained in the same manner as Synthetic Example 1, 20.0 mL of toluene, 0.1 mL of pyridine, and 0.65 mL of a xylene solution containing a 2% Pt complex of 1,3-divinyl-1,1,3,3-tetramethyldisiloxane were added, and then 1.01 g of tris(trimethylsilyloxy)silane was added dropwise. After being stirred at room temperature overnight, the mixture was purified to give 1.36 g of the following compound (47).
¹H NMR (CDCl₃, 400 MHz) δ [ppm]: 0.013-0.142 (m), 0.408 (t), 1.137-1.378 (m), 1.591 (quin), 2.275 (t), 3.639 (s)

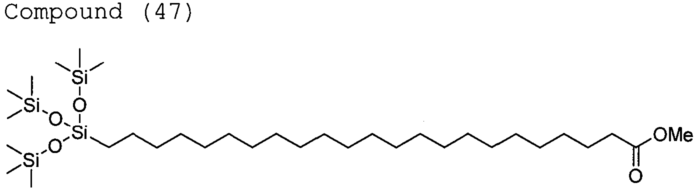

### (Synthetic Example 48)

First, 0.64 g of compound (47) obtained in Synthetic Example 47, 2.8 mL of allylamine, and 0.12 g of 1,5,7-triazabicyclo[4.4.0]dec-5-ene were added, and the mixture was then stirred at 75°C for 3 hours. Thereafter, the mixture was washed with an aqueous hydrochloric acid solution, dehydrated over magnesium sulfate, and concentrated under reduced pressure to give 0.68 g of compound (48).
¹H NMR (CDCl₃, 400 MHz) δ [ppm]: 0.011-0.217 (m), 0.407 (t), 1.153-1.378 (m), 1.612 (quin),2.163 (t), 3.865(tt), 5.090-5.182 (m), 5.409 (br), 5.770-5.866 (m)

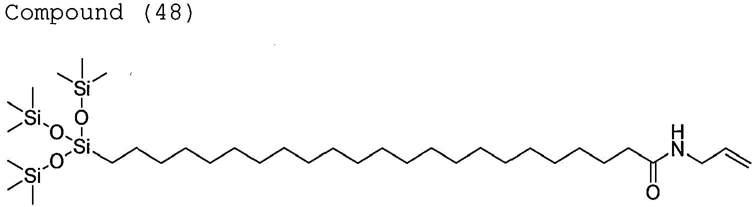

### (Synthetic Example 49)

First, 0.56 g of compound (48) obtained in Synthetic Example 48, 10.0 mL of toluene, 0.022 mL of aniline, and 0.46 mL of a xylene solution containing a 2% Pt complex of 1,3-divinyl-1,1,3,3-tetramethyldisiloxane were added, then 0.2 mL of trimethoxysilane was added, and the mixture was stirred at 45°C for 2 hours. Thereafter, the mixture was purified to give 0.57 g of the following compound having a terminal trimethoxysilyl group (49).
¹H NMR (CDCl₃, 400 MHz) δ [ppm]: 0.010-0.141 (m), 0.408 (t), 0.629 (t), 1.150-1.376 (m), 1.519-1.652(m), 2.121 (t), 3.172 (q), 3.516-3.589 (m), 5.607 (br)

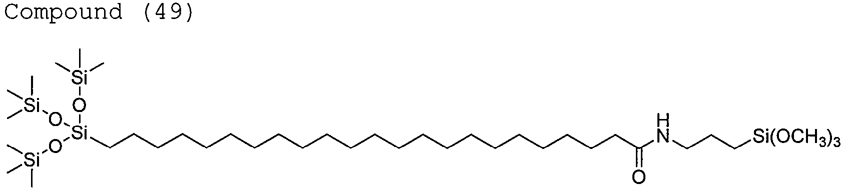

### (Surface-treating agent 15)

Compound (49) obtained above was diluted so as to be a 20 wt% ethanol solution, and thus a surface-treating agent 15 was obtained.

### (Synthetic Example 50)

First, 4.00 g of 11-bromo-1-undecene CH₂=CH(CH₂)₉Br, 23.0 ml of toluene, 0.11 g of triacetoxymethylsilane, 0.76 ml of a xylene solution containing a 2% Pt complex of 1,3-divinyl-1,1,3,3-tetramethyldisiloxane, and 6.98 ml of 1,1,1,3,5,5,5-heptamethyltrisiloxane were added, and the mixture was stirred at room temperature for 6 hours. Thereafter, the mixture was purified to give 7.02 g of the following terminal siloxane compound (50) ((CH₃)₃SiO)₂SiCH₃(CH₂)₁₁Br.
¹H NMR (CDCl₃, 400 MHz) δ [ppm]: 0.002 (s), 0.050-0.100 (m), 0.427-0.465 (t), 1.266-1.281 (m), 1.404-1.440 (m), 1.816-1.888 (m), 3.387-3.421 (t)

### Terminal siloxane compound (50)

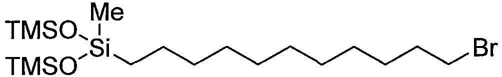

### (Synthetic Example 51)

First, 2.50 g of the terminal siloxane compound (50) ((CH₃)₃SiO)₂SiCH₃(CH₂)₁₁Br obtained in Synthetic Example 50, 5.5 ml of tetrahydrofuran, 0.14 g of magnesium, and 0.02 g of iodine were added, and the mixture was stirred at 65°C for 2 hours. Subsequently, 0.89 ml of chlorodimethylsilane was added in an ice bath, and the mixture was stirred at room temperature overnight. Thereafter, the mixture was purified to give 2.14 g of the following terminal siloxane compound (51) (CH₃)₃SiO)₂SiCH₃(CH₂)₁₁Si(CH₃)₂H.
¹H NMR (CDCl₃, 400 MHz) δ [ppm]: 0.052 (s), 0.061 (s), 0.077-0.101 (m), 0.428-0.467 (t), 0.551-0.597 (m), 1.261-1.311 (m), 3.817-3.853 (m)

### Terminal siloxane compound (51)

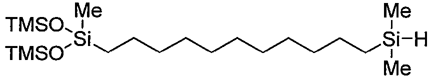

### (Synthetic Example 52)

First, 1.51 g of the terminal siloxane compound (51) (CH₃)₃SiO)₂SiCH₃(CH₂)₁₁Si(CH₃)₂H obtained in Synthetic Example 51, 7.6 g of toluene, 0.01 g of pyridine, and 0.08 ml of a xylene solution containing a 2% Pt complex of 1,3-divinyl-1,1,3,3-tetramethyldisiloxane were added, then 0.70 mL of trimethoxy(7-octen-1-yl)silane was added, and the mixture was heated to 50°C and stirred for 6 hours. Thereafter, the mixture was purified to give 1.97 g of the following terminal siloxane compound (52) ((CH₃)₃SiO)₂SiCH₃(CH₂)₁₁Si(CH₃)₂(CH₂)₈Si(OCH₃)₃.
¹H NMR (CDCl₃, 400 MHz) δ [ppm]: 0.082 (s), 0.426-0.480 (m), 0.625-0.665 (m), 1.231-1.349 (m), 1.370-1.1.409 (m), 3.566 (s)

### Terminal siloxane compound (52)

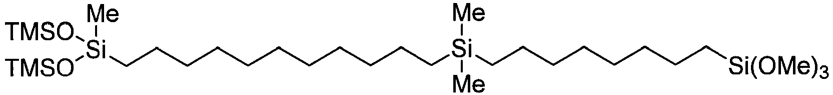

### (Na-containing intermediate layer forming material)

First, 2.2 g of sodium hydroxide (manufactured by Fujifilm Wako Pure Chemical Corporation) was dissolved in 24 g of distilled water to give a 8.4% by mass aqueous sodium hydroxide solution. Then, 24 g of this 8.4% by mass aqueous sodium hydroxide solution and 20 g of MS gel (M.S. GEL D-100-60A (manufactured by AGC Si-Tech Co., Ltd.)) were mixed so that the aqueous sodium hydroxide solution was absorbed into the MS gel. The MS gel that had absorbed the aqueous sodium hydroxide solution was dried at 25°C for 8 hours, then molded with a tableting machine (4 MPa for 1 minute), and fired at 1,000°C for 1 hour to give a formed article 1 (pellets).

### (Formation of surface-treating layer)

### (Examples 1, 3, 5, 7, 9, 11, 13, 15, 17, 19, 21, 23 and 25, and Comparative Example 1)

The surface-treating agents 1 to 14 prepared above were vacuum-deposited onto chemically tempered glass (Gorilla Glass, manufactured by Corning Incorporated, thickness 0.7 mm). Specifically, a molybdenum boat in a vacuum deposition system was filled with 0.1 g of a surface-treating agent, and the vacuum deposition system was evacuated to a pressure of 3.0 × 10⁻³ Pa or lower. Thereafter, a silicon dioxide film having a thickness of 7 nm was formed, followed by heating the boat by the resistance heating scheme to form a surface-treating layer. Thereafter, heat treatment was performed in an oven at 150°C for 2 hours to give a surface-treating layer.

### (Examples 2, 4, 6, 8, 10, 12, 14, 16, 18, 20, 22, 24, 26 and 28)

The surface-treating agents 1 to 3 and 5 to 14 prepared above were vacuum-deposited onto chemically tempered glass (Gorilla Glass, manufactured by Corning Incorporated, thickness 0.7 mm). Specifically, a molybdenum boat in a vacuum deposition system was filled with 0.1 g of a surface-treating agent, and the vacuum deposition system was evacuated to a pressure of 3.0 × 10⁻³ Pa or lower. Thereafter, vapor deposition by the electron beam deposition scheme was performed using the formed article 1 to form a Na-containing silicon dioxide film having a thickness of 7 nm, followed by heating the boat by the resistance heating scheme to form a surface-treating layer. Thereafter, heat treatment was performed in an oven at 150°C for 2 hours to give a surface-treating layer.

### <Evaluation>

### [Evaluation of abrasion resistance]

### (Initial evaluation)

As initial evaluation (0 times of abrasion), the static water contact angle was measured after forming the surface-treating layer and wiping off excessive matter on the surface. For contact angle measurement, a fully automatic contact angle meter DropMaster 700 (manufactured by Kyowa Interface Science Co., Ltd.) was used under an environment of 25°C. Specifically, the substrate having the measurement target, i.e., the surface-treating layer, was placed horizontally, water was dripped from a microsyringe onto the surface, and a static image was taken with a video microscope one second after the dripping water to thereby measure the static contact angle. The static contact angle was measured at five different points on the surface-treating layer of the substrate, and the average value calculated therefrom was used.

### (Evaluation after abrasion resistance test)

A friction block as described below was brought into contact with the formed surface-treating layer, a 5 N load was applied thereto, and the friction block was moved back and forth at a speed of 40 mm/sec, with the load being applied. After predetermined times of abrasion, the static water contact angle was measured. The results are shown in (Table 1).

### - Friction block

The surfaces of an article obtained by processing silicone rubber as described below were covered with cotton soaked with artificial sweat having the following composition, and the article was used as a friction block.

Composition of artificial sweat:
Anhydrous disodium hydrogen phosphate: 2 g
Sodium chloride: 20 g
85% Lactic acid: 2 g
Histidine hydrochloride: 5 g
Distilled water: 1 kg

Article obtained by processing silicone rubber:
Obtained by processing Silicone Rubber Stopper SR-51 manufactured by Tigers Polymer Corporation into a cylinder having a diameter of 1 cm and a thickness of 1 cm.

**[Table 1]**

| Example | Surface-treating agent | Underlayer | Water contact angle (degree) | | Rate of retaining initial angle (%) |
|---|---|---|---|---|---|
| | | | Initial | After 100 times of abrasion | |
| Example 1 | Surface-treating agent 1 | Silicon dioxide film | 96.1 | 68.9 | 72 |
| Example 2 | Surface-treating agent 1 | Sodium-containing silicon dioxide film | 95.2 | 79.9 | 84 |
| Example 3 | Surface-treating agent 2 | Silicon dioxide film | 100.5 | 73.1 | 73 |
| Example 4 | Surface-treating agent 2 | Sodium-containing silicon dioxide film | 100.8 | 86.1 | 85 |
| Example 5 | Surface-treating agent 3 | Silicon dioxide film | 104.5 | 57.2 | 55 |
| Example 6 | Surface-treating agent 3 | Sodium-containing silicon dioxide film | 99.1 | 57.0 | 57 |
| Example 7 | Surface-treating agent 5 | Silicon dioxide film | 104.2 | 80.6 | 77 |
| Example 8 | Surface-treating agent 5 | Sodium-containing silicon dioxide film | 104.0 | 83.5 | 80 |
| Example 9 | Surface-treating agent 6 | Silicon dioxide film | 99.5 | 68.1 | 68 |
| Example 10 | Surface-treating agent 6 | Sodium-containing silicon dioxide film | 98.5 | 76.3 | 77 |
| Example 11 | Surface-treating agent 7 | Silicon dioxide film | 106.3 | 72.6 | 68 |
| Example 12 | Surface-treating agent 7 | v | 106.8 | 81.4 | 68 |
| Example 13 | Surface-treating agent 8 | Silicon dioxide film | 97.7 | 67.4 | 69 |
| Example 14 | Surface-treating agent 8 | Sodium-containing silicon dioxide film | 101.5 | 84.9 | 84 |
| Example 15 | Surface-treating agent 9 | Silicon dioxide film | 101.3 | 77.6 | 77 |
| Example 16 | Surface-treating agent 9 | Sodium-containing silicon dioxide film | 101.5 | 93.2 | 92 |
| Example 17 | Surface-treating agent 10 | Silicon dioxide film | 100.1 | 58.4 | 58 |
| Example 18 | Surface-treating agent 10 | Sodium-containing silicon dioxide film | 99.5 | 71.9 | 72 |
| Example 19 | Surface-treating agent 11 | Silicon dioxide film | 103.2 | 68.3 | 66 |
| Example 20 | Surface-treating agent 11 | Sodium-containing silicon dioxide film | 105.6 | 71.1 | 67 |
| Example 21 | Surface-treating agent 12 | Silicon dioxide film | 99.7 | 77.3 | 78 |
| Example 22 | Surface-treating agent 12 | Sodium-containing silicon dioxide film | 102.3 | 88.4 | 86 |
| Example 23 | Surface-treating agent 13 | Silicon dioxide film | 104.9 | 71.1 | 68 |
| Example 24 | Surface-treating agent 13 | Sodium-containing silicon dioxide film | 103.7 | 89.5 | 86 |
| Example 25 | Surface-treating agent 14 | Silicon dioxide film | 104.2 | 70.1 | 67 |
| Example 26 | Surface-treating agent 14 | Sodium-containing silicon dioxide film | 104.1 | 87.2 | 84 |
| Example 28 | Surface-treating agent 15 | Sodium-containing silicon dioxide film | 104.5 | 76.1 | 73 |
| Comparative Example 1 | Surface-treating agent 4 | Silicon dioxide film | 96.1 | 48.2 | 50 |

### Industrial Applicability

The surface-treating agent of the present disclosure can be suitably utilized in a variety of applications.

## Claims

1. A compound represented by the following formula (1):
[Formula 1]
R¹-X¹-R^{Si} (1)
wherein
R¹ is a monovalent group containing one or more Si atoms to which neither a hydroxyl group nor a hydrolyzable group is directly bonded,
X¹ is a divalent organic group including an alkylene group having 11 or more carbon atoms, and
R^{Si} is a monovalent group containing a Si atom to which a hydroxyl group or a hydrolyzable group is bonded.

2. The compound according to claim 1, wherein
R¹ is R³-(SiR⁴₂O)ₙ-SiR⁴₂-,
R³ is a C₁₋₁₂ alkyl group,
R⁴ is each independently a C₁₋₁₂ alkyl group, and
n is 0 to 1,500.

3. The compound according to claim 2, wherein R³ is a methyl group.

4. The compound according to any one of claims 1 to 3, wherein
R¹ is R³-(SiR⁴₂O)ₙ-SiR⁴₂-;
R³ is a group represented by the following group A or group B: 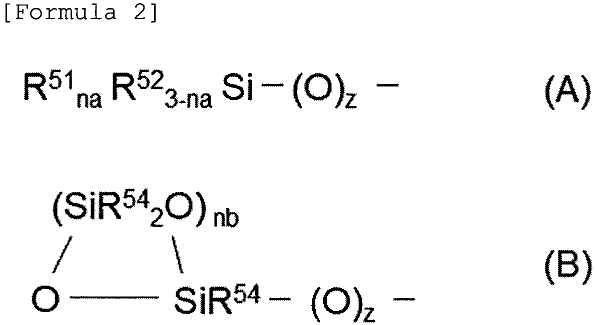 wherein
R⁵¹ is each independently a group represented by -(R⁶¹-SiR⁵³₂)ₘₐ-R⁵³,
R⁶¹ is each independently an oxygen atom or a C₁₋₆ alkylene group,
R⁵³ is each independently a hydrocarbon group or R⁵¹',
R⁵¹' has the same meaning as R⁵¹,
ma is each independently an integer of 1 to 5,
provided that the number of R⁵¹' in R⁵¹ is 20 or less,
R⁵² is each independently a hydrocarbon group,
na is an integer of 1 to 3,
R⁵⁴ is each independently a hydrocarbon group,
nb is an integer of 1 to 5, and
z is 0 or 1;
R⁵⁴ is each independently a C₁₋₁₂ alkyl group; and
n is 0 to 1,500.

5. The compound according to any one of claims 2 to 4, wherein R⁴ is a methyl group.

6. The compound according to any one of claims 2 to 5, wherein n is 1 or 2.

7. The compound according to any one of claims 1 to 6, wherein
R¹ is -SiR⁵₃,
R⁵ is each independently a C₁₋₆ alkyl group or -SiR⁶₃, and
R⁶ is each independently a C₁₋₆ alkyl group.

8. The compound according to any one of claims 1 to 7, wherein
R¹ is a group represented by the following group A or group B: 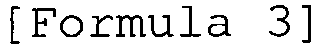 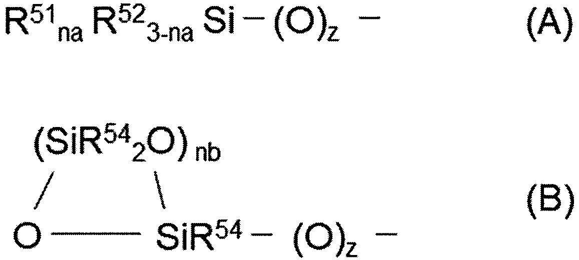 wherein
R⁵¹ is each independently a group represented by -(R⁶¹-SiR⁵³₂)ₘₐ-R⁵³,
R⁶¹ is each independently an oxygen atom or a C₁₋₆ alkylene group,
R⁵³ is each independently a hydrocarbon group or R⁵¹',
R⁵¹' has the same meaning as R⁵¹,
ma is each independently an integer of 1 to 5,
provided that the number of R¹' in R¹ is 20 or less,
R⁵² is each independently a hydrocarbon group,
na is an integer of 1 to 3,
R⁵⁴ is each independently a hydrocarbon group,
nb is an integer of 1 to 5, and
z is 0 or 1.

9. The compound according to any one of claims 1 to 8, wherein
X¹ is a divalent organic group further including -CO-, -COO-, -NR²-, -CONR²-, -OCONR²-, -NR²-CO-NR²-, -O-, -S-, -O-(CH₂)ₓ-CONR²-, or -O-(CH₂)ₓ-CO-,
R² is a hydrogen atom or a C₁₋₆ alkyl group, and
x is an integer of 1 to 20.

10. The compound according to any one of claims 1 to 9, wherein X¹ is a group represented by the following formula:
-X²¹-X¹⁰-X¹¹-X¹²-
wherein
X²¹ is -O-, R⁶¹_{b1}R⁶²_{3-b1}C-, R⁶³_{b2}R⁶⁴_{3-b2}Si-, or R⁶⁵₂N-,
R⁶¹ is a divalent organic group,
R⁶² is a hydrogen atom or a monovalent organic group,
R⁶³ is a divalent organic group,
R⁶⁴ is a hydrogen atom or a monovalent organic group,
R⁶⁵ is a divalent organic group,
b1 is 2 or 3,
b2 is 2 or 3,
X¹⁰ is an alkylene group having 11 or more carbon atoms,
X¹¹ is a single bond, -CO-, -COO-, -NR²-, -CONR²-, - OCONR²-, -NR²-CO-NR²-, -O-, -S-, -O-(CH₂)ₓ-CONR²-, or -O-(CH₂)ₓ-CO-,
R² is a hydrogen atom or a C₁₋₆ alkyl group,
x is an integer of 1 to 20, and
X¹² is a single bond or a C₁₋₆ alkylene group.

11. The compound according to claim 1, wherein the number of carbon atoms of the alkylene group in X¹ is greater than the number of Si atoms in R¹.

12. The compound according to any one of claims 1 to 11, wherein the number of carbon atoms of the alkylene group in X¹ is not less than 2.5 times the number of Si atoms in R¹.

13. The compound according to any one of claims 1 to 12, wherein the number of carbon atoms of the alkylene group in X¹ is greater than the number of atoms of the main chain in R¹.

14. The compound according to any one of claims 1 to 13, wherein the number of carbon atoms of the alkylene group in X¹ is not less than 2.0 times the number of atoms of the main chain in R¹.

15. The compound according to any one of claims 1 to 14, wherein
R^{Si} is a group represented by the following formula (S1), (S2), (S3), or (S4):
[Formula 4]
- SiR¹¹ₙ₁R¹²₃₋ₙ₁ (S1)
- SiR^{a1}ₖ₁R^{b1}ₗ₁R^{c1}ₘ₁ (S2)
- CR^{d1}ₖ₂R^{e1}ₗ₂R^{f1}ₘ₂ (S3)
- NR^{g1}R^{h1} (S4)
wherein
R¹¹ is each independently a hydroxyl group or a hydrolyzable group,
R¹² is each independently a hydrogen atom or a monovalent organic group,
n1 is an integer of 1 to 3,
R^{a1} is each independently -Z¹-SiR²¹ₚ₁R²²_{q1}R²³ᵣ₁,
Z¹ is each independently an oxygen atom or a divalent organic group,
R²¹ is each independently -Z^{1'}-SiR^{21'}_{p1'}R^{22'}_{q1'}R^{23'}_{r1'},
R²² is each independently a hydroxyl group or a hydrolyzable group,
R²³ is each independently a hydrogen atom or a monovalent organic group,
p1 is each independently an integer of 0 to 3,
q1 is each independently an integer of 0 to 3,
r1 is each independently an integer of 0 to 3,
Z^{1'} is each independently an oxygen atom or a divalent organic group,
R^{21'} is each independently -Z^{1"}-SiR^{22"}_{q1"}R^{23"}_{r1"},
R^{22'} is each independently a hydroxyl group or a hydrolyzable group,
R^{23'} is each independently a hydrogen atom or a monovalent organic group,
p1' is each independently an integer of 0 to 3,
q1' is each independently an integer of 0 to 3,
r1' is each independently an integer of 0 to 3,
Z^{1"} is each independently an oxygen atom or a divalent organic group,
R^{22"} is each independently a hydroxyl group or a hydrolyzable group,
R^{23"} is each independently a hydrogen atom or a monovalent organic group,
q1" is each independently an integer of 0 to 3,
r1" is each independently an integer of 0 to 3,
R^{b1} is each independently a hydroxyl group or a hydrolyzable group,
R^{c1} is each independently a hydrogen atom or a monovalent organic group,
k1 is each independently an integer of 0 to 3,
l1 is each independently an integer of 0 to 3,
m1 is each independently an integer of 0 to 3,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a hydrogen atom or a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}₁₂R^{f1}ₘ₂, and
Z⁴ is each independently a single bond, an oxygen atom, or a divalent organic group,
provided that, in the formulae (S2), (S3), and (S4), at least one Si atom to which a hydroxyl group or a hydrolyzable group is bonded is present.

16. A compound represented by the following formula (1a):
[Formula 5]
R¹-X²-Rⁱ (1a)
wherein
R¹ is a monovalent group containing one or more Si atoms to which neither a hydroxyl group nor a hydrolyzable group is directly bonded,
X² is an alkylene group having 11 or more carbon atoms,
Rⁱ is -COOR⁷, -CONR⁸₂, or -CONR⁷-CR⁸₃,
R⁷ is a hydrogen atom or a C₁₋₆ alkyl group, and
R⁸ is a C₂₋₆ alkenyl group having a double bond at a terminal.

17. A surface-treating agent comprising the compound according to any one of claims 1 to 15.

18. The surface-treating agent according to claim 17, further comprising a condensate of the compound according to any one of claims 1 to 15.

19. The surface-treating agent according to claim 17 or 18, further comprising a solvent selected from compounds represented by R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉
wherein
R⁸¹ to R⁸⁹ are each independently a monovalent organic group having 1 to 10 carbon atoms,
m8 is an integer of 1 to 6,
m9 is an integer of 4 to 8, and
n8 is an integer of 0 to 6.

20. The surface-treating agent according to claim 19, wherein the solvent is R⁸⁴R⁸⁵R⁸⁶Si-(O-SiR⁸⁷R⁸⁸)ₘ₈-R⁸⁹.

21. The surface-treating agent according to claim 19 or 20, wherein the solvent is hexamethyldisiloxane, hexaethyldisiloxane, octamethyltrisiloxane, octamethylcyclotetrasiloxane, or decamethylcyclopentasiloxane.

22. The surface-treating agent according to any one of claims 17 to 21, which is for vacuum deposition.

23. The surface-treating agent according to any one of claims 17 to 21, which is for wet coating.

24. A pellet comprising the surface-treating agent according to any one of claims 17 to 23.

25. An article comprising a substrate and a layer on the substrate, wherein the layer is formed from the compound according to any one of claims 1 to 15.

26. The article according to claim 25, comprising, between the substrate and the aforementioned layer, a silicon oxide-containing intermediate layer.

27. The article according to claim 26, wherein the intermediate layer comprises an alkali metal atom.

28. The article according to claim 27, wherein the alkali metal atom is at least partially a sodium atom.

29. The article according to any one of claims 25 to 28, which is an optical member.

30. The article according to any one of claims 25 to 29, which is a display.
